(19) Europäisches Patentamt
European Patent Office
Office européen des brevets

(11) **EP 2 437 009 B1**

(12) **EUROPEAN PATENT SPECIFICATION**

(45) Date of publication and mention of the grant of the patent:
**27.09.2017 Bulletin 2017/39**

(51) Int Cl.:
***F25B 13/00*** *(2006.01)*  ***F25B 31/00*** *(2006.01)*
***F25B 47/02*** *(2006.01)*  ***F25B 49/02*** *(2006.01)*

(21) Application number: **11155873.0**

(22) Date of filing: **24.02.2011**

(54) **Air conditioner**

Klimaanlage

Climatiseur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2010 JP 2010218179**
**29.09.2010 JP 2010218187**

(43) Date of publication of application:
**04.04.2012 Bulletin 2012/14**

(73) Proprietor: **Panasonic Corporation**
**Kadoma-shi**
**Osaka 571-8501 (JP)**

(72) Inventors:
• **Kamoda, Hirokazu**
**Osaka-shi**
**Osaka 540-6207 (JP)**

• **Iuchi, Akira**
**Osaka-shi**
**Osaka 540-6207 (JP)**
• **Kawazoe, Daisuke**
**Osaka-shi**
**Osaka 540-6207 (JP)**
• **Ashihara, Masayoshi**
**Osaka-shi**
**Osaka 540-6207 (JP)**

(74) Representative: **Eisenführ Speiser**
**Patentanwälte Rechtsanwälte PartGmbB**
**Postfach 31 02 60**
**80102 München (DE)**

(56) References cited:
**WO-A1-2010/106805**   **JP-A- S63 233 266**
**US-A1- 2006 150 668**

EP 2 437 009 B1

**Description**

BACKGROUND OF THE INVENTION

1. Field of the Invention

The present invention relates to an air conditioner having a heat storage tank for accommodating a heat storage material that stores heat generated by a compressor, and also having a heat storage heat exchanger for heat exchanging with use of heat stored in the heat storage material.

2. Description of the Related Art

A conventional heat pump air conditioner conducts defrosting during heating by switching a four-way valve from a heating cycle to a cooling cycle when frost has been formed on an outdoor heat exchanger. In this defrosting method, an indoor fan is not in operation during defrosting, but cold air flows gradually out of an indoor unit, thus posing a problem of warmth being lost.

In view of this, another air conditioner has been proposed having a heat storage device mounted on a compressor in an outdoor unit for the purpose of defrosting by making use of waste heat of the compressor that has been stored in a heat storage tank during heating (see, for example, Japanese Laid-Open Patent Publication No. 3-31666).

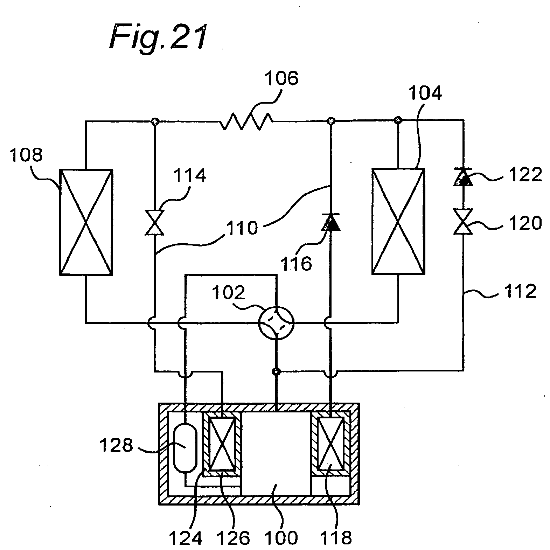

Fig. 21 depicts an example of a refrigerating cycle employing such a defrosting method. This refrigerating cycle includes an outdoor unit, in which a compressor 100, a four-way valve 102, an outdoor heat exchanger 104, and a capillary tube 106 are provided, and an indoor unit in which an indoor heat exchanger 108 is provided. All of the compressor 100, the four-way valve 102, the outdoor heat exchanger 104, the capillary tube 106, and the indoor heat exchanger 108 are connected via refrigerant piping. The refrigerating cycle also includes a first bypass circuit 110 for bypassing the capillary tube 106 and a second bypass circuit 112 having one end connected to a pipe extending from a discharge side of the compressor 100 to the indoor heat exchanger 108 via the four-way valve 102 and the other end connected to another pipe extending from the capillary tube 106 to the outdoor heat exchanger 104. The first bypass circuit 110 includes a two-way valve 114, a check valve 116, and a heat storage heat exchanger 118, while the second bypass circuit 112 includes a two-way valve 120 and a check valve 122.

Further, a heat storage tank 124 is provided around the compressor 100, and a heat storage material 126 for heat exchanging with the heat storage heat exchanger 118 is filled in the heat storage tank 124.

In this refrigerating cycle, the two two-way valves 114, 120 are opened during defrosting to allow part of a refrigerant discharged from the compressor 100 to flow into the second bypass circuit 112 and the remaining refrigerant to flow into the indoor heat exchanger 108 via the four-way valve 102. The refrigerant that passes through the indoor heat exchanger 108 is used for heating, and a slight amount of the refrigerant then flows into the outdoor heat exchanger 104 via the capillary-tube 106, while the remaining majority of the refrigerant flows into the first bypass circuit 110 and into the heat storage heat exchanger 118 via the two-way valve 114 to take heat from the heat storage material 126, and then passes through the check valve 116 to join the refrigerant that has passed through the capillary tube 106 before the refrigerant flows into the outdoor heat exchanger 104. Thereafter, the refrigerant flowing toward the outdoor heat exchanger 104 joins the refrigerant that has passed through the second bypass circuit 112 at an inlet of the outdoor heat exchanger 104 to conduct defrosting by making use of heat contained in the refrigerant. After the defrosting, the refrigerant passes through the four-way valve 102 and then enters the compressor 100.

In this refrigerating cycle, the second bypass circuit 112 acts to introduce a hot gas discharged from the compressor 100 during defrosting to the outdoor heat exchanger 104 and maintaining high pressure of the refrigerant flowing into the outdoor heat exchanger 104, thus making it possible to enhance the defrosting capability and complete the defrosting within a considerably short period of time.

Prior art document WO 2010/106805 A1 discloses an air conditioner which is controlled in such a manner that a post-start up overshoot is kept low while rapidly securing full start performance. The air conditioner has a refrigeration cycle including a compressor and a coolant tubing wherein some tubes are provided in the form of magnetic tubes, and a coil is provided to the magnetic tubes to generate a magnetic field for inductively heating the magnetic tube and the coolant flowing trough the tubes. A pressure sensor detects coolant pressure, and a controller evaluates the detected pressure and causes the generation of the magnetic field by the coil at predetermined power levels. Power supply is also controlled in view of a specific timing which may depend from the variation of a frequency of the compressor.

Furthermore, prior art document JP S63 233266 A discloses an air conditioner having a refrigeration cycle in which a refrigerant flows through a compressor, a four-way valve, an indoor heat exchanger, a heat expansion valve, an outdoor heat exchanger and a four-way valve in this order during heating. The air conditioner further comprises a heat storage tank for accommodating a heat storage material for storing heat generated by the compressor and a heat storage heat exchanger. A heat storage bypass circuit connects a refrigerant pipe between the indoor heat exchanger and the expansion valve and a refrigerant pipe between the four-way valve and an inlet port defined in the compressor, and the heat storage bypass circuit is provided with a heat storage heat exchanger and a heat storage three-way valve.

## SUMMARY OF THE INVENTION

However, the above-described conventional air conditioner includes a problem that the rate of rise of the heating operation is slow while enhancing the defrosting capability during heating is needed.

The present invention has been developed to overcome the above-described disadvantages.

It is accordingly an objective of the present invention to provide an air conditioner having a quick heating mode in which a warm wind is blown out more quickly than in a normal heating mode to expedite a rise of the heating operation. In accomplishing the above objectives an air conditioner according to claim 1 is provided. Dependent claims 2-5 specify further advantageous modifications of the air conditioner of claim 1.

## BRIEF DESCRIPTION OF THE DRAWINGS

The above and other objectives and features of the present invention will become more apparent from the following description of a preferred embodiment thereof with reference to the accompanying drawings, throughout which like parts are designated by like reference numerals, and wherein:

Fig. 1 is a piping diagram of an air conditioner according to the present invention having a heat storage device;

Fig. 2 is a diagram similar to Fig. 1, but depicting an operation of the air conditioner of Fig. 1 and a flow of refrigerant during normal heating;

Fig. 3 is a diagram similar to Fig. 1, but depicting an operation of the air conditioner of Fig. 1 and a flow of refrigerant during defrosting/heating;

Fig. 4 is a graph indicating a change in frequency of a compressor during heating in a normal heating mode and in a quick heating mode;

Fig. 5 is a graph indicating a temperature rise of an indoor heat exchanger in the quick heating mode;

Fig. 6 is a table indicating maximum speeds of an indoor fan in the quick heating mode;

Fig. 7 is a graph indicating a defrosting initiation temperature and a heat storage material temperature rise-initiation temperature set based on an outdoor air temperature;

Fig. 8 is a flowchart indicating a defrosting/heating control;

Fig. 9 is a graph indicating a change of a refrigerant temperature at an outlet of an outdoor heat exchanger after initiation of a defrosting operation;

Fig. 10 is a flowchart indicating a control after the air conditioner has been returned to a heating operation from the defrosting operation;

Fig. 11 is a diagram similar to Fig. 1, but particularly depicting positions where various temperature sensors are fitted;

Fig. 12 is a schematic diagram indicating a protection control for the heat storage material based on a compressor temperature;

Fig. 13 is a timing chart indicating an opening and closing control for a heat storage two-way valve;

Fig. 14 is a schematic diagram indicating a protection control for the heat storage material based on a refrigerant discharge temperature;

Fig. 15 is a schematic diagram indicating another protection control for the heat storage material based on the refrigerant discharge temperature;

Fig. 16 is a graph indicating a relationship among an actual temperature of the heat storage material, a temperature detected by a heat storage tank temperature sensor, and a temperature obtained by correcting the detected temperature, when the outdoor air temperature is 2°C;

Fig. 17 is a graph indicating a relationship among the actual temperature of the heat storage material, the temperature detected by the heat storage tank temperature sensor, and the temperature obtained by correcting the detected temperature, when the outdoor air temperature is -7°C;

Fig. 18 is a graph indicating a relationship among the actual temperature of the heat storage material, the temperature detected by the heat storage tank temperature sensor, and the temperature obtained by correcting the detected temperature, when the outdoor air temperature is -20°C;

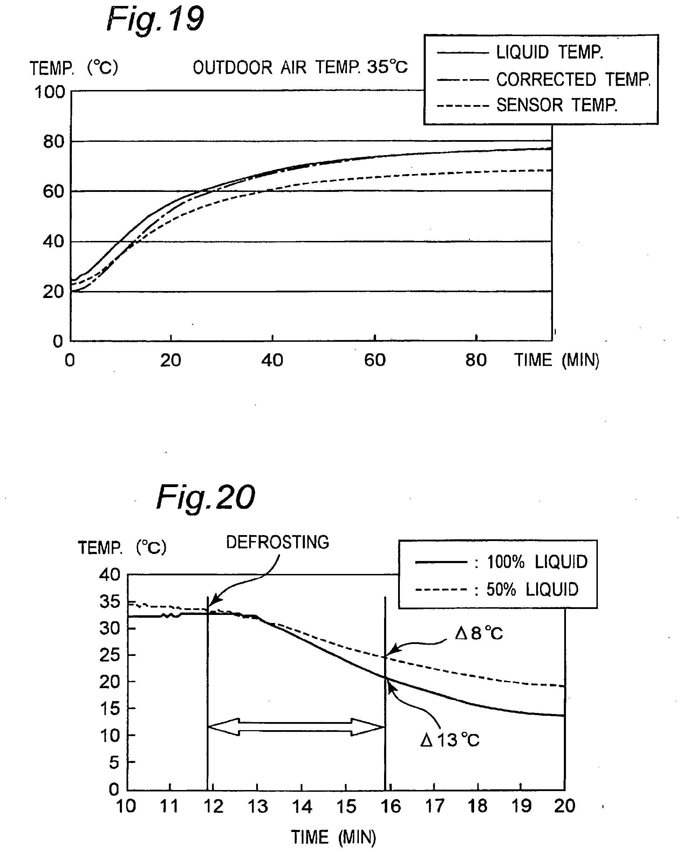

Fig. 19 is a graph indicating a relationship among the actual temperature of the heat storage material, the temperature detected by the heat storage tank temperature sensor, and the temperature obtained by correcting the detected temperature, when the outdoor air temperature is 35°C;

Fig. 20 is a graph indicating a temperature change of the heat storage material after the defrosting operation when the heat storage tank is filled with a sufficient amount of heat storage material and with an insufficient amount of heat storage material; and

Fig. 21 is a schematic piping diagram of a conventional refrigerating cycle.

## DETAILED DESCRIPTION OF THE EMBODIMENTS

Embodiments of the present invention are explained hereinafter with reference to the drawings.

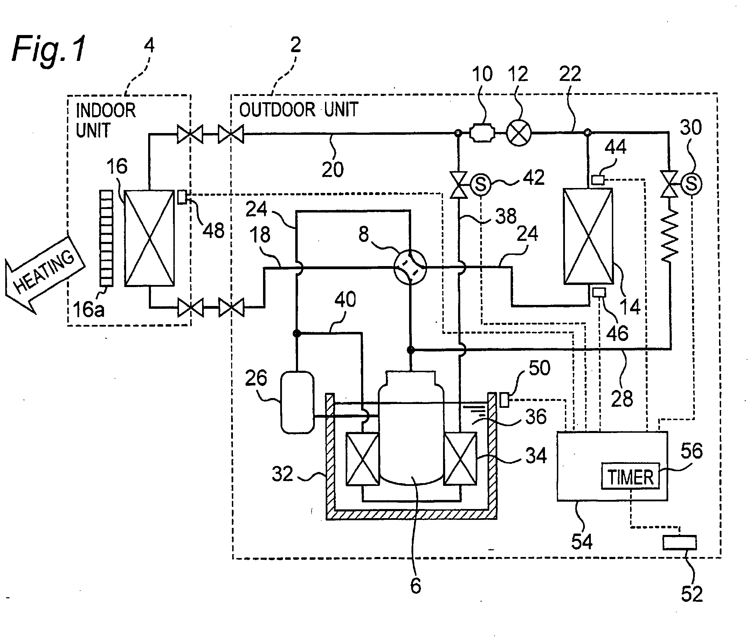

Fig. 1 depicts a piping diagram of an air conditioner embodying a refrigerating cycle according to the present invention. As shown therein, the air conditioner includes an outdoor unit 2 and an indoor unit 4 connected to each other via refrigerant piping.

The outdoor unit 2 accommodates a compressor 6, a four-way valve 8, a strainer 10, an expansion valve 12, and an outdoor heat exchanger 14, while the indoor unit 4 accommodates an indoor heat exchanger 16 and an indoor fan 16a. Such constituent elements are connected via refrigerant piping to define a refrigerating cycle.

More specifically, the compressor 6 and the indoor heat exchanger 16 are connected to each other via a refrigerant pipe 18 on which the four-way valve 8 is mounted, and the indoor heat exchanger 16 and the expansion valve 12 are connected to each other via a refrigerant pipe 20 on which the strainer 10 is mounted. The expansion valve 12 and the outdoor heat exchanger 14 are connected to each other via a refrigerant pipe 22, and the outdoor heat exchanger 14 and the compressor 6 are connected to each other via a refrigerant pipe 24.

The four-way valve 8 is located midway on the refrigerant pipe 24, and an accumulator 26 for separating a liquid refrigerant and a gaseous refrigerant is provided on the refrigerant pipe 24 on a refrigerant suction side of the compressor 6. The compressor 6 and the refrigerant pipe 22 are connected to each other via a refrigerant pipe 28, on which a defrosting two-way valve (for example, a solenoid valve) 30 is provided.

A heat storage tank 32 accommodating a heat storage heat exchanger 34 therein is provided around the compressor 6 and filled with a heat storage material (for example, ethylene glycol aqueous solution) 36 for heat exchanging with the heat storage heat exchanger 34. The heat storage tank 32 and the heat storage heat exchanger 34 constitute a heat storage device.

The refrigerant pipe 20 and the heat storage heat exchanger 34 are connected to each other via a refrigerant pipe 38, and the heat storage heat exchanger 34 and the refrigerant pipe 24 are connected to each other via a refrigerant pipe 40. A heat storage two-way valve (for example, a solenoid valve) 42 is provided on the refrigerant pipe 38.

The indoor unit 4 accommodates, in addition to the indoor heat exchanger 16, a fan (not shown), vertical wind direction changing blades (not shown), and horizontal wind direction changing blades (not shown). The indoor heat exchanger 16 exchanges heat between indoor air sucked into the indoor unit 4 by the fan and a refrigerant flowing through the indoor heat exchanger 16 so that air heated or cooled by the heat exchange may be blown into a room during heating or cooling, respectively. As occasion demands, the vertical wind direction changing blades vertically change the wind direction from the indoor unit 4, and the horizontal wind direction changing blades horizontally change the wind direction from the indoor unit 4.

The outdoor heat exchanger 14 is provided with an outdoor heat exchanger inlet temperature sensor 44 for detecting the refrigerant temperature at an inlet thereof and an outdoor heat exchanger outlet temperature sensor 46 for detecting the refrigerant temperature at an outlet thereof during heating. The indoor heat exchanger 16 is provided with an indoor heat exchanger temperature sensor 48 for detecting the temperature thereof. Also, the heat storage tank 32 is provided with a heat storage tank temperature sensor 50 for detecting the temperature thereof, and the outdoor unit 2 is provided with an outdoor air temperature sensor 52 for detecting the temperature of outdoor air.

The compressor 6, the fan, the vertical wind direction changing blades, the horizontal wind direction changing blades, the four-way valve 8, the expansion valve 12, the defrosting two-way valve 30, the heat storage two-way valve 42, the outdoor heat exchanger inlet temperature sensor 44, the outdoor heat exchanger outlet temperature sensor 46, the indoor heat exchanger temperature sensor 48, the heat storage tank temperature sensor 50, the outdoor air temperature sensor 52, and the like are electrically connected to a controller 54 (for example, a microcomputer). Operations of the compressor 6, the fan, the vertical wind direction changing blades, the horizontal wind direction changing blades, the four-way valve 8, and the expansion valve 12 are controlled based on control signals from the controller 54, and opening and closing of the defrosting two-way valve 30 and that of the heat storage two-way valve 42 are also controlled based on control signals from the controller 54.

A relation of connection and functioning of the component parts of the above-described refrigerating cycle are explained hereinafter with a flow of the refrigerant, taking the case of the heating operation.

A refrigerant discharged from a discharge port in the compressor 6 passes through the four-way valve 8 and reaches the indoor heat exchanger 16 via the refrigerant pipe 18. The refrigerant condenses in the indoor heat exchanger 16 upon heat exchange with indoor air, leaves the indoor heat exchanger 16, and passes through the refrigerant pipe 20 and through the strainer 10, which prevents invasion of foreign substances into the expansion valve 12, before the refrigerant reaches the expansion valve 12. The refrigerant is reduced in pressure by the expansion valve 12 and reaches the outdoor heat exchanger 14 via the refrigerant pipe 22. The refrigerant then evaporates in the outdoor heat exchanger 14 upon heat exchange with outdoor air and passes through the refrigerant pipe 24, the four-way valve 8, and the accumulator 26, before the refrigerant returns to a suction port in the compressor 6.

The refrigerant pipe 28 branched from the refrigerant pipe 18 between the discharge port in the compressor 6 and the four-way valve 8 joins the refrigerant pipe 22 between the expansion valve 12 and the outdoor heat exchanger 14 via the defrosting two-way valve 30.

Furthermore, the heat storage tank 32 accommodating the heat storage material 36 and the heat storage heat exchanger 34 therein is disposed so as to encircle and contact the compressor 6 to store heat generated by the compressor 6 in the heat storage material 36. The refrigerant pipe 38 branched from the refrigerant pipe 20 between the indoor heat exchanger 16 and the strainer 10 reaches an inlet of the heat storage heat exchanger 34 via the heat storage two-way valve 42, and the refrigerant pipe 40 extending from an outlet of the heat storage heat exchanger 34 joins the refrigerant pipe 24 between the four-way valve 8 and the accumulator 26.

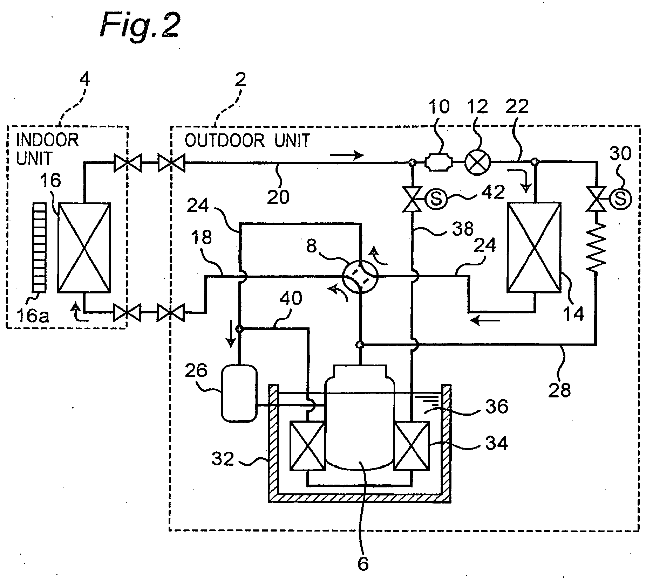

An operation of the air conditioner during normal heating is explained hereinafter with reference to Fig. 2 schematically depicting the operation of the air conditioner of Fig. 1 and a flow of the refrigerant during normal heating.

During normal heating, the defrosting two-way valve 30 and the heat storage two-way valve 42 are both closed. In this case, as described above, the refrigerant discharged from the discharge port in the compressor 6 passes through the four-way valve 8 and reaches the indoor heat exchanger 16 via the refrigerant pipe 18. Having condensed in the indoor heat exchanger 16 upon heat exchange with indoor air, the refrigerant leaves the indoor heat exchanger 16, passes through the refrigerant pipe 20, and reaches the expansion valve 12. The refrigerant is then reduced in pressure by the expansion valve 12 and reaches the outdoor heat exchanger 14 via the refrigerant pipe 22. Having evaporated in the outdoor heat exchanger 14 upon heat exchange with outdoor air, the refrigerant passes through the refrigerant pipe 24 and through the four-way valve 8, and returns to the suction port in the compressor 6.

Heat generated by the compressor 6 is transferred from an outer wall of the compressor 6 to an outer wall of the heat storage tank 32 and stored in the heat storage material 36 accommodated in the heat storage tank 32.

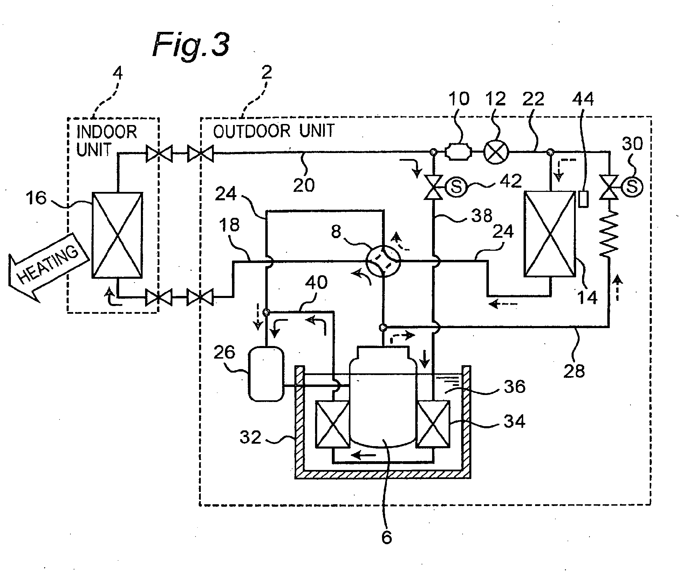

An operation of the air conditioner during defrosting/heating is next explained with reference to Fig. 3 schematically depicting the operation of the air conditioner of Fig. 1 and a flow of the refrigerant during defrosting/heating. In Fig. 3, solid arrows indicate a flow of refrigerant used for heating, and dotted arrows indicate a flow of refrigerant used for defrosting

If frost is formed and grows on the outdoor heat exchanger 14 during the above-discussed normal heating, the resistance of the outdoor heat exchanger to wind increases to thereby reduce the amount of air passing therethrough, thus resulting in a reduction of the evaporating temperature in the outdoor heat exchanger 14. As shown in Fig. 1, the air conditioner employed as a refrigerating cycle according to the present invention is provided with an outdoor heat exchanger inlet temperature sensor 44 for detecting the refrigerant temperature at an inlet of the outdoor heat exchanger 14 during heating, and if this temperature sensor 44 detects a reduced evaporating temperature compared with an evaporating temperature when no frost has been formed, the controller 54 outputs a command to shift the air conditioner from the normal heating operation to the defrosting/heating operation.

When the air conditioner is shifted from the normal heating condition to the defrosting/heating operation, the controller 54 controls the defrosting two-way valve 30 and the heat storage two-way valve 42 to open them. In this case, in addition to the flow of refrigerant during the normal heating operation as discussed above, part of a gaseous refrigerant discharged from the discharge port in the compressor 6 passes through the refrigerant pipe 28 and the defrosting two-way valve 30 and joins a refrigerant passing through the refrigerant pipe 22 to heat the outdoor heat exchanger 14. Having condensed and turned into a liquid phase, the refrigerant passes through the refrigerant pipe 24 and returns to the suction port in the compressor 6 via the four-way valve 8 and the accumulator 26.

It is to be noted that the refrigerant pipe 28 connecting the pipe between the expansion valve 12 and the outdoor heat exchanger 14 to the pipe between the discharge port in the compressor 6 and the four-way valve 8 can be referred to as "defrosting bypass circuit", because a gaseous refrigerant for heating the outdoor heat exchanger 14 for defrosting passes therethrough.

Also, part of a liquid refrigerant diverged from the refrigerant pipe 20 between the indoor heat exchanger 16 and the strainer 10 passes through the refrigerant pipe 38 and the heat storage two-way valve 42 and absorbs heat from the heat storage material 36 when passing through the heat storage heat exchanger 34. The liquid refrigerant then evaporates and turns into a gaseous phase. The resultant gaseous refrigerant passes through the refrigerant pipe 40, then joins a refrigerant passing through the refrigerant pipe 24; and finally returns to the suction port in the compressor 6 via the accumulator 26.

It is also to be noted that the refrigerant pipes 38, 40 connecting the pipe between the indoor heat exchanger 16 and the expansion valve 12 to the pipe between the suction port in the compressor 6 and the four-way valve 8 can be referred to as "heat storage bypass circuit", because a refrigerant passing through the heat storage heat exchanger 34 absorbs heat from the heat storage material 36.

Although the refrigerant returning to the accumulator 26 contains a liquid refrigerant returning from the outdoor heat exchanger 14, the latter is admixed with a high-temperature gaseous refrigerant returning from the heat storage heat exchanger 34 to thereby promote evaporation of the liquid refrigerant. Accordingly, it is not likely that a liquid refrigerant would pass through the accumulator 26 and return to the compressor 6, thus making it possible to enhance the reliability of the compressor 6.

When the outdoor heat exchanger 14 is heated by the gaseous refrigerant discharged from the discharge port in the compressor 6, and frost adhering to the outdoor heat exchanger 14 melts in the vicinity of zero degree, the temperature of the outdoor heat exchanger 14, which has dropped below the freezing point by adhesion of frost at the initiation of defrosting/heating, begins to increase upon termination of melting of the frost. When the outdoor heat exchanger outlet temperature sensor 46 detects such a temperature rise of the outdoor heat exchanger 14, a determination is made by the controller 54 that defrosting has been completed, and the controller 54 outputs a command to shift the defrosting/heating operation to the normal heating operation.

The air conditioner according to the present invention has a quick heating mode. If the quick heating mode is set by a remote controller (not shown) that controls operation of the indoor unit 4, the next heating operation is initiated in the quick heating mode. By way of example, the remote controller is provided with a "powerful operation" button, and if this button is depressed, the powerful operation, i.e., the quick heating mode is made effective, When the air conditioner is stopped, the powerful operation mode is maintained. Accordingly, if the heating operation is resumed, for example, the next morning, not the normal heating operation but the powerful operation or the quick heating operation is initiated.

The quick heating mode is explained hereinafter. When the heating operation is initiated in the quick heating mode, the heat storage two-way valve 42 is opened and retained opened for a predetermined period of time (for example, 20 seconds). At this moment, a refrigerant having passed through the outdoor heat exchanger 14 and a refrigerant having passed through the heat storage heat exchanger 34 join and enter the compressor 6.

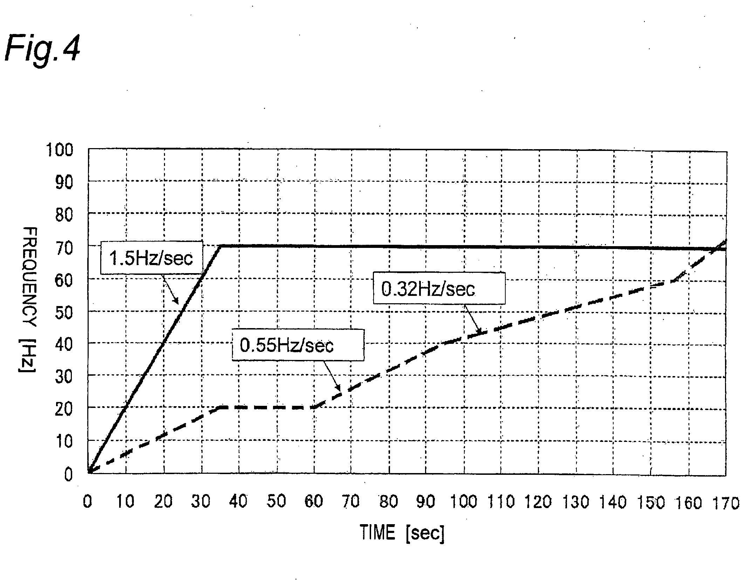

Fig. 4 is a graph indicating a change in frequency during heating in the normal heating mode (dotted line) and in the quick heating mode (solid line). In the normal heating operation of an air conditioner without the use of the heat storage tank, a decline in low pressure, a return of a liquid refrigerant to the compressor 6, or the like may occur according to conditions at the start of the heating operation, and a considerable increase in frequency of the compressor 6 is not accordingly allowed in terms of durability.

Accordingly, as shown in Fig. 4, the operation frequency of the compressor 6 is gradually increased in the normal heating mode. On the other hand, in the quick heating mode of the air conditioner with the use of the heat storage tank 32, the rate of increase of the operation frequency of the compressor 6 is made greater than that in the normal heating mode. The reason for this is that opening the heat storage two-way valve 42 allows the refrigerant to bypass the outdoor heat exchanger 14 and flow toward a suction side of the compressor 6, such that the amount of heat remaining in the heat storage material 36 is transferred to the refrigerant, thus making it possible to restrain a decline in low pressure at the start of operation of the compressor 6. As a result, the rate of increase of the operation frequency of the compressor 6 can be increased. Also, if the operation frequency of the compressor 6 reaches a predetermined frequency (70 Hz in this embodiment), it is controlled constant.

Further, the placement of the heat storage tank 32 around the compressor 6 can avoid a temperature reduction when the compressor 6 is not in operation, thus resulting in a quick temperature rise of a refrigerant discharged from the compressor 6, compared with the case with no heat storage tank.

In the normal heating mode, if the indoor heat exchanger temperature sensor 48 detects a predetermined heating initiation temperature (for example, 22°C), operation of the indoor fan 16a is initiated, and the speed of the indoor fan 16a is increased with an increase in temperature detected by the indoor heat exchanger temperature sensor 48.

On the other hand, in the quick heating mode, if the indoor heat exchanger temperature sensor 48 detects a temperature (for example, 45°C) higher than the predetermined heating initiation temperature (for example, 22°C) in the normal heating mode, operation of the indoor fan 16a is initiated. In the normal heating mode, the operation of the indoor fan 16a is initiated about five minutes after the start of the normal heating operation, but in the quick heating mode, even if the temperature for initiation of operation of the indoor fan 16a is set higher than that in the normal heating mode, the operation of the indoor fan 16a is initiated about two minutes after the start of the heating operation. This is due to an increased rate of increase of the operation frequency of the compressor 6 in the quick heating mode, and also due to the placement of the heat storage tank 32 around the compressor 6, which can restrain cooling of the compressor 6 and increase the discharge temperature of the compressor 6.

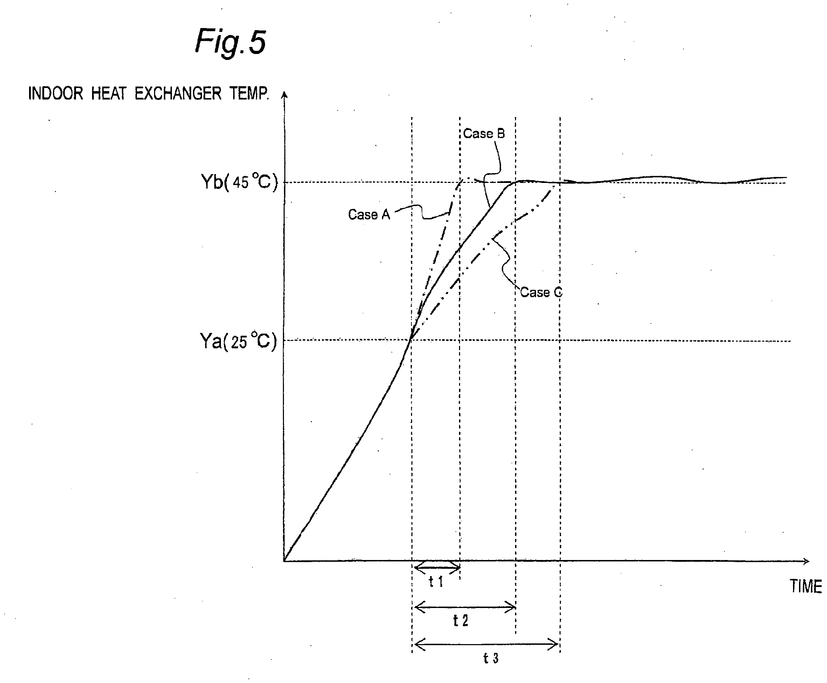

Fig. 5 is a graph indicting the timing at which operation of the indoor fan 16a is initiated in the quick heating mode.

As shown in Fig. 5, if the indoor heat exchanger temperature sensor 48 detects a predetermined temperature Yb (45°C in this embodiment), the operation of the indoor fan 16a is initiated. However, if the indoor fan 16a is abruptly driven at a high speed at the start of the heating operation, it is likely that the temperature of the indoor heat exchanger 16 may abruptly reduce.

In view of this, in the practice of the present invention, the initial speed of the indoor fan 16a is limited and variably set depending on a period of time during which the temperature of the indoor heat exchanger 16 increases from a predetermined temperature Ya (for example, 25 °C) to the aforementioned predetermined temperature Yb (45°C in this embodiment).

More specifically, the limited value of the initial speed of the indoor fan 16a is reduced with an increase in the period of time from the predetermined temperature Ya to the predetermined temperature Yb.

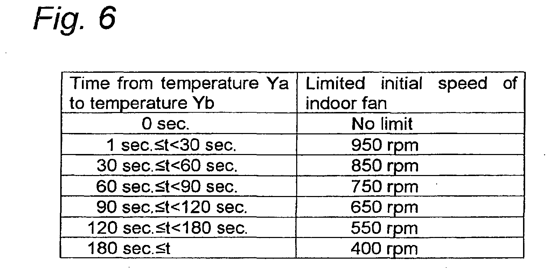

Fig. 6 is a table indicating maximum speeds of the indoor fan 16a at the start of operation thereof in the quick heating mode. Although Fig. 6 indicates the limited values when the two predetermined temperatures Ya, Yb are 25°C and 45°C, the predetermined temperatures are not limited thereby.

In Fig. 6, if the period of time from the temperature Ta to the temperature Tb is, for example, 45 seconds, the initial speed of the indoor fan 16a is limited to 850 rpm. In the normal heating operation, however, if the temperature of the indoor heat exchanger 16 reaches the temperature Yb (45°C), the speed of the indoor fan 16 may be about 1200 rpm, though it varies according to various conditions. If the air volume is abruptly increased at the start of the heating operation, the temperature of the indoor heat exchanger 16 abruptly reduces, thus losing comfort. In view of this, the limited values of the indoor fan 16a are set as shown in Fig. 6. Although in the table of Fig. 6 the limited value is fixed for each period of time, it may be calculated in a functional fashion depending on the period of time.

Returning to Fig. 5, three rising conditions are shown therein. The period of time from the temperature Ya to the temperature Yb is T1 in Case A (single-dotted chain line), t2 in Case B (solid line), and t3 in Case C (double-dotted chain line). Because t2 is greater than t1, and t3 is greater than t2 (t1<t2<t3), the limited values at the start of operation of the indoor fan 16a are as follows:

# Case A> Case B> Case C.

That is, if the rate of temperature increase of the indoor heat exchanger 16 is small, the indoor heat exchanger 16 is largely affected by the outdoor air temperature, and it is likely, if the air volume is abruptly increased, that the temperature of the indoor heat exchanger 16 may abruptly reduce. Accordingly, the limited value is set low in this case. On the other hand, if the rate of temperature increase of the indoor heat exchanger 16 is large, the indoor heat exchanger 16 is not largely affected by the outdoor air temperature. In this case, even if the air volume is increased to some extent, it can be estimated that the temperature reduction of the indoor heat exchanger 16 is small, and the limited value is accordingly set high.

Also, the limited value is gradually increased for every predetermined period of time (for example, every five seconds) after the start of operation of the indoor fan 16a. By way of example, the limited value is increased 10 rpm for every five seconds. By so controlling, the effect of the heating operation is enhanced while the refrigerating cycle is being stabilized. The limitation of the speed of the indoor fan 16a may be released optionally or after a lapse of a given period of time.

<Determination for defrosting and defrosting initiation conditions>

Fig. 4 depicts a defrosting initiation line (β-line) that has been set to the refrigerant temperature at the inlet of the outdoor heat exchanger 14, which temperature is detected by the outdoor heat exchanger inlet temperature sensor 44, and a heat storage material temperature rise-initiation line (θ-line) higher than the defrosting initiation line in the refrigerant temperature at the inlet of the outdoor heat exchanger 14, both based on the outdoor air temperature.

The defrosting initiation line indicates a threshold value to initiate the defrosting operation when the temperature detected by the outdoor heat exchanger inlet temperature sensor 44 is less than a defrosting initiation temperature (defrosting initiation line) at a given outdoor air temperature. On the other hand, the heat storage material temperature rise-initiation line is intended to predict initiation of the defrosting operation and determine whether a temperature rise control for the heat storage material 36 should be conducted when the temperature detected by the outdoor heat exchanger inlet temperature sensor 44 is less than a heat storage material temperature rise control-initiation temperature (heat storage material temperature rise-initiation line) at a given outdoor air temperature. That is, the heat storage material temperature rise-initiation line is used to determine whether or not an amount of heat necessary for the defrosting operation is stored in the heat storage tank 32, and if it is not stored, a control is conducted to increase the amount of heat stored in the heat storage tank 32 by increasing the temperature of the heat storage tank 32.

More specifically, when the temperature detected by the outdoor heat exchanger inlet temperature sensor 44 is less than the heat storage material temperature rise-initiation line, if the temperature detected by the heat storage tank temperature sensor 50 does not reach a predetermined temperature (for example, 30°C), the temperature of the heat storage tank 32 is increased by a predetermined temperature (for example, 2-3°C) by increasing the speed of the compressor 6 or by reducing the opening of the expansion valve 12 to increase the high-pressure side pressure. The predetermined temperature (30 °C in this embodiment) is a temperature calculated through experiments or the like and can be appropriately changed depending on the constitution of the refrigerating cycle or the like, but in this embodiment, if the heat storage tank 32 has a temperature of about 30°C, the amount of heat contained therein can melt about 700-800 grams of frost. In short, it is sufficient if the predetermined temperature is set to determine whether or not an amount of heat sufficient to melt a given amount of frost is stored in the heat storage tank 32.

Because an increase in speed of the compressor 6 is followed by an increase in input, it is preferred in terms of energy saving that the temperature of the heat storage tank 32 be increased by reducing the opening of the expansion valve 12, but the temperature of the heat storage tank 32 may be increased by increasing the speed of the compressor 6.

As described above, the heat storage material temperature rise-initiation temperature ($\theta$) is set based on the outdoor air temperature, but it depends on the defrosting initiation temperature ($\beta$) and is set, for example, as follows:

$$\beta < \theta \leq \beta + 4.$$

In this way, the heating operation can be continued while the defrosting is being positively performed by determining whether or not a given amount of heat is stored in the heat storage tank 32 before the start of the defrosting operation.

<Defrosting/heating control>

Because the amount of heat stored in the heat storage material 36 is limited, this control is conducted to make effective use of the amount of heat stored in the heat storage material 36. That is, when the air conditioner is shifted from the normal heating operation to the defrosting/heating operation by controlling the defrosting two-way valve 30 and the heat storage two-way valve 42, the defrosting two-way valve 30 is first opened, and the heat storage two-way valve 42 is opened after a lapse of a predetermined period of time (for example, 10-20 seconds) from the time of opening of the defrosting two-way valve 30.

Although the defrosting/heating operation is conducted only after the defrosting two-way valve 30 and the heat storage two-way valve 42 have been both opened, if the heat storage two-way valve 42 is opened earlier than the defrosting two-way valve 30, the amount of heat stored in the heat storage material 36 is wasted, and if the defrosting two-way valve 30 and the heat storage two-way valve 42 are opened at the same time, a refrigerant from the outdoor heat exchanger 14 and a refrigerant from the indoor heat exchanger 16 are sucked into the compressor 6 at the same time, and a pressure fluctuation may occur. Accordingly, by setting an appropriate time lag between the time of opening of the defrosting two-way valve 30 and that of opening of the heat storage two-way valve 42, not only can the pressure fluctuation be minimized, but entry of a liquid refrigerant into the compressor 6 can be also avoided, thus making it possible to enhance the reliability of the compressor 6.

For this purpose, as shown in Fig. 1, the controller 54 is provided with a timer 56 for counting a period of time. When the air conditioner is shifted from the normal heating operation to the defrosting/heating operation, the timer 56 counts a lapse time from the time of opening of the defrosting two-way valve 30, and if the period of time counted by the timer 56 reaches a predetermined period of time, the heat storage two-way valve 42 is opened.

This control is explained in detail with reference to a flowchart of Fig. 5.

At step S1, a determination is made as to whether or not the temperature detected by the indoor heat exchanger temperature sensor 48 is equal to a predetermined temperature Ta (for example, 45°C). If the detected temperature is equal to the predetermined temperature Ta, the program advances to step S5, and if the detected temperature is not equal to the predetermined temperature Ta, the program advances to step S2, at which a determination is made whether the detected temperature exceeds the predetermined temperature Ta. If the detected temperature is greater than the predetermined temperature Ta, the operation frequency of the compressor 6 is reduced at step S3, and if the detected temperature is less than the predetermined temperature Ta, the operation frequency of the compressor 6 is increased at step S4. When the frequency control of the compressor 6 at step S3 or S4 is terminated, the program returns to step S1. Although the predetermined temperature Ta has been described as being 45°C, the former is not limited to the latter.

That is, the pressure fluctuation in a refrigerating cycle would occur by opening both the defrosting two-way valve 30 and the heat storage two-way valve 42 when the temperature of the indoor heat exchanger 16 is high, and there is a large pressure difference between the high pressure side and the low pressure side. Because it is likely that the pressure fluctuation may cause noise, if the temperature detected by the indoor heat exchanger temperature sensor 48 exceeds the predetermined temperature Ta, the operation frequency of the compressor 6 is reduced until the temperature detected by the indoor heat exchanger temperature sensor 48 becomes equal to the predetermined temperature Ta for reduction of the pressure of the high pressure side.

Also, in order to make, during the defrosting operation, effective use of the amount of heat contained in the refrigerant after the heat exchange in the indoor heat exchanger 16, if the temperature detected by the indoor heat exchanger temperature sensor 48 is less than the predetermined temperature Ta, the operation frequency of the compressor 6 is increased until the detected temperature becomes equal to the predetermined temperature Ta to thereby improve the efficiency of the defrosting operation after the heating operation.

If the temperature detected by the indoor heat exchanger temperature sensor 48 becomes equal to the predetermined temperature Ta at step S1, the normal heat storage defrosting operation is commenced while making effective use of heat stored in the heat storage tank 32. During this defrosting operation, the defrosting two-way valve 30 is opened at step S5 to introduce the refrigerant discharged from the compressor 6 into the outdoor heat exchanger 14, followed by step S6 at which a determination is made whether or not the period of time counted by the timer 56 after the time of opening of the defrosting two-way valve 30 reaches the predetermined period of time. If the period of time counted by the timer 56 reaches the predetermined period of time, the heat storage two-way valve 42 is opened at step S7 to introduce into the heat storage heat exchanger 34 the refrigerant that has passed through the indoor heat exchanger 16. If the predetermined period of time is not reached, the program returns to step S6.

When the heat storage two-way valve 42 is opened at step S7, the temperature detected by the outdoor heat exchanger outlet temperature sensor 46 is compared with a predetermined temperature Tb (for example, 6°C) indicative of termination of the defrosting operation at step S8. If the former is less than the latter, a determination is made that frost still remains or a base plate (an upper or lower plate of the outdoor heat exchanger 14) still freezes up. Accordingly, the defrosting operation is continued, and the program advances to step S9.

At step S9, if the period of time counted by the timer 56 from the time of opening of the defrosting two-way valve 30 does not reach a predetermined period of time (for example, 7 minutes), the program returns to step S8. If the temperature detected by the outdoor heat exchanger outlet temperature sensor 46 is greater than or equal to the predetermined temperature Tb, a determination is made that no frost remains and the base plate is unfrozen, and the defrosting two-way valve 30 and the heat storage two-way valve 42 are both closed at step S10 to thereby terminate the defrosting operation. The air conditioner is then shifted to the normal heating operation.

Also, at step S9, if the period of time counted by the timer 56 reaches the predetermined period of time, the program advances to step S10 irrespective of the temperature detected by the outdoor heat exchanger outlet temperature sensor 46. The period of time counted by the timer 56 is reset when the air conditioner is shifted to the normal heating operation.

The reason why the defrosting operation is forcibly terminated when the period of time counted by the timer 56 reaches the predetermined period of time at step S9 is that the amount of heat in the heat storage tank 32 is limited, and the heat storage tank 32 is designed to store an amount of heat that would be consumed for the predetermined period of time. Accordingly, even if the defrosting operation is continued over the predetermined period of time, no heat remains in the heat storage tank 32 and, hence, further defrosting has no effect.

In this embodiment, the temperature detected by the outdoor heat exchanger inlet temperature sensor 44 is always compared with the outdoor air temperature from the start to the end of the defrosting operation, and if the outdoor air temperature is higher than the outdoor heat exchanger inlet temperature, operation of an outdoor fan (not shown), provided in the outdoor unit 2 to convey air to the outdoor heat exchanger 14, is continued. By so controlling, heat contained in outdoor air is effectively utilized to thereby promote defrosting of the outdoor heat exchanger 14.

However, once a determination has been made during the defrosting operation that the outdoor heat exchanger inlet temperature is higher than the outdoor air temperature, the outdoor fan is not operated until the defrosting operation is terminated because the operation of the outdoor fan merely increases the outdoor heat exchanger inlet temperature.

<Heating flow after defrosting operation>

Fig. 6 is a graph indicating a change in refrigerant temperature at the outlet of the outdoor heat exchanger 14 after initiation of the defrosting operation.

As shown in Fig. 6, the refrigerant outlet temperature of the outdoor heat exchanger 14 is below the freezing point (for example, -10°C) at the time of initiation of the defrosting operation, but immediately after the defrosting operation has been commenced, the refrigerant outlet temperature of the outdoor heat exchanger 14 rises abruptly. Thereafter, the refrigerant outlet temperature of the outdoor heat exchanger 14 gradually rises within a predetermined temperature range (for example, 0-2°C) in which frost is melted, but the temperature rise tends to be stagnant. If the refrigerant outlet temperature of the outdoor heat exchanger 14 exceeds this temperature range, almost all frost is melted, but there is a good chance that the base plate of the outdoor heat exchanger 14 is still frozen. Accordingly, continuing defrosting operation increases the temperature of the outdoor heat exchanger 14 after the frost has melted. Because no frost remains at this time, the temperature rise is greater than that during melting of the frost. When the freezing of the base plate is mostly dissolved, the defrosting operation is conducted to preheat the outdoor heat exchanger 14 and, hence, the refrigerant outlet temperature thereof gradually increases.

In the practice of the present invention, the refrigerant outlet temperature of the outdoor heat exchanger 14 during the defrosting operation has two threshold values, and the subsequent form of the defrosting operation is changed depending on the refrigerant outlet temperature of the outdoor heat exchanger 14 when the air conditioner has been returned to the heating operation from the defrosting operation.

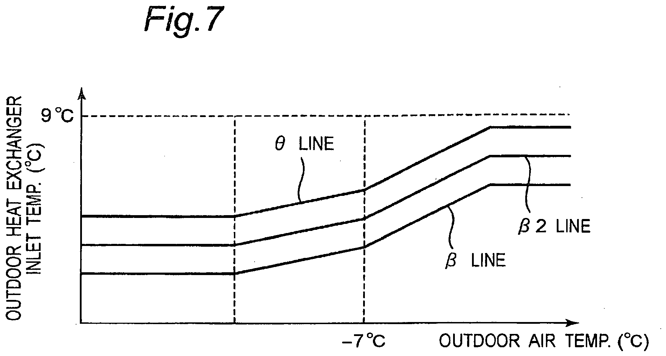

More specifically, there are provided a first threshold value (for example, 2°C) and a second threshold value (for example, 6°C) greater than the first threshold value, both set to the refrigerant outlet temperature of the outdoor heat exchanger 14 based on the graph of Fig. 6. The refrigerant outlet temperature of the outdoor heat exchanger 14 when the air conditioner has been returned to the heating operation from the defrosting operation is compared with the first and second threshold values, and a numerical value indicative of a comparison result is added to a memory (not shown) provided in the controller 54. As shown in Fig. 7, one of the heating operation, the heat storage defrosting operation, and the defrosting operation by switching of the four-way valve 8 from the heating operation to the cooling operation is selected based on the numerical value stored in the memory.

In this application, the term "defrosting operation" means the normal heat storage defrosting operation referred to above, and the defrosting operation by switching of the four-way valve 8 from the heating operation to the cooling operation is referred to as "four-way valve defrosting operation", and this defrosting operation is conducted under the condition in which the defrosting two-way valve 30 and the heat storage two-way valve 42 have been both closed.

Furthermore, a return to the heating operation from the defrosting operation is referred to as "A-return" when the refrigerant outlet temperature of the outdoor heat exchanger 14 is greater than or equal to the second threshold value, as "B-return" when the refrigerant outlet temperature is less than the second threshold value, but greater than or equal to the first threshold value, and as "C-return" when the refrigerant outlet temperature is less than the first threshold value.

More specifically, a value M integrated in the memory is reset (M=0) when the air conditioner is operated for the first time, and when the temperature detected by the indoor heat exchanger temperature sensor 48 becomes equal to the predetermined temperature Ta after completion of the normal heating operation, the normal heat storage defrosting operation is commenced, as described above. If the refrigerant outlet temperature of the outdoor heat exchanger 14 is greater than or equal to the second threshold value after completion of the defrosting operation, a determination is made that no frost remains and the base plate is unfrozen. In this case, the integrated value M in the memory is reset, and the heating operation is conducted (A-return).

After completion of the defrosting operation, if the refrigerant outlet temperature of the outdoor heat exchanger 14 is greater than or equal to the first threshold value, but less than the second threshold value, a determination is made that no frost remains, but the base plate still freezes up. In this case, a first predetermined value (for example, 1) is added to the memory, and the heating operation is conducted (B-return).

Also, after completion of the defrosting operation, if the refrigerant outlet temperature of the outdoor heat exchanger 14 is less than the first threshold value, a determination is made that frost remains. In this case, a second predetermined value (for example, 2) greater than the first predetermined value is added to the memory, and the heating operation is conducted (C-return).

In the case of A-return, after the heating operation has been conducted at step S21 in Fig. 7, the controls of Fig. 7 are terminated.

On the other hand, in the case of B-return or C-return, after completion of the heating operation, a subsequent control differs depending on the condition of the return from the defrosting operation to the heating operation, i.e., the integrated value M in the memory.

In the case of B-return, after the heating operation has been conducted at step S22, the defrosting operation is conducted at step S23, and in the case of A-return after B-return, the heating operation is conducted at step S24, and the integrated value M in the memory is reset (M:0→1). The control is thereafter terminated.

In the case of B-return after B-return (M=2), the heating operation is conducted at step S25, and the defrosting operation is subsequently conducted at step S26. The subsequent control differs depending on the condition of the return from the defrosting operation to the heating operation.

In the case of A-return after B-return has repeated twice, the heating operation is conducted at step S27, and the integrated value M in the memory is reset (M:2→0). The control is thereafter terminated.

On the other hand, in the case of B-return (M=3) or C-return (M=4), a determination is made that an amount of heat required for defrosting is not stored in the heat storage material 36. In this case, the heating operation is conducted for a first predetermined period of time at step S28, and the defrosting operation is subsequently conducted at step S29. The term "first predetermined period of time" refers to a period of time required for heat storage and is set to, for example, 30 minutes. The heating operation is conducted for the first predetermined period of time irrespective of the temperature detected by the outdoor heat exchanger inlet temperature sensor 44, which temperature provides an indication of determination of the presence or absence of frost. Thereafter, in the case of A-return, the heating operation is conducted at step S30, and the integrated value M in the memory is reset. The control is then terminated.

In the case of B-return or C-return, a determination is made that the normal heat storage defrosting operation cannot achieve complete defrosting. In this case, at step S31, the heating operation is conducted for a second predetermined period of time shorter than the first predetermined period of time, and the four-way valve defrosting operation is subsequently conducted to completely remove frost adhering to the outdoor heat exchanger 14. The term "second predetermined period of time" refers to a period of time for heating required for stabilizing the refrigerating cycle in consideration of, for example, the balance of a refrigerating machine oil in the refrigerating cycle. The second predetermined period of time is set to, for example, 10 minutes. After the four-way valve defrosting operation, the integrated value M in the memory is reset.

In the case of C-return after the defrosting operation at step S23, controls similar to those at steps S28, S29, S30, and S31 are conducted at steps S32, S33, S34, and S35.

Of the controls of Fig. 7, steps S36, S37, S38, S39, S40, S41, and S42 in a right-side flow (flow after C-return) are respectively the same as steps S25, S26, S27, S28, S29, S30, and S31 referred to above and, hence, duplicative explanation thereof is omitted.

The controls of Fig. 7 are summarized as follows.

- In the case where a return to the heating operation repeats at least twice without the temperature detected by the outdoor heat exchanger outlet temperature sensor 46 reaching a predetermined temperature, and the integrated value M in the memory is greater than or equal to a third threshold value (for example, 3), the heating operation is continued for a predetermined period of time irrespective of the temperature detected by the outdoor heat exchanger inlet temperature sensor 46 and subsequently shifted to the defrosting operation.
- In the case where a return to the heating operation repeats at least three times without the temperature detected by the outdoor heat exchanger outlet temperature sensor 46 reaching the predetermined temperature, and the integrated value M in the memory is greater than or equal to a fourth threshold value (for example, 4) greater than the third threshold value, the defrosting operation is conducted by switching the four-way valve 8 in a direction of the cooling operation under the condition in which the defrosting two-way valve 30 and the heat storage two-way valve 42 have been both closed.

Although in the graph of Fig. 6 there are provided two threshold values in the refrigerant outlet temperature of the outdoor heat exchanger 14 during defrosting, the controls of Fig. 7 can be conducted using only one threshold value (only the first threshold value) without providing the second threshold value.

In this case, A-return and B-return as shown in Fig. 6 are brought into one (A-return), and it is sufficient if only a left-side flow (flow after A-return) and a right-side flow (flow after C-return with B-returns in this flow omitted) as shown in Fig. 7 are conducted.

In this embodiment, the second threshold value is set to be equal to the predetermined temperature Tb referred to above, and if the defrosting operation is terminated when the temperature detected by the outdoor heat exchanger outlet temperature sensor 46 exceeds the predetermined temperature Tb, a return from the defrosting operation becomes an A-return at all times. However, the second threshold value is not limited to the predetermined temperature Tb and may be set to any other suitable temperature different therefrom as long as complete melting of frost can be detected.

<Change of defrosting initiation conditions>

Repetition of B-return or C-return is caused by a shortage of the amount of heat stored in the heat storage material 36 in the heat storage tank 32 when a large amount of frost has been formed on the outdoor heat exchanger 14. In view of this, in the practice of the present invention, another defrosting initiation line ($\beta2$-line) higher than the defrosting initiation line ($\beta$-line) by a predetermined temperature (for example, 2°C) is set as shown in Fig. 4.

The temperature $\beta2$ is higher than the defrosting initiation temperature ($\beta$) and variably set, for example, as follows based on the condition of frost formed on the outdoor heat exchanger 14 when the air conditioner has returned to the heating operation from the defrosting operation and also on the period of time for defrosting:

$$\beta+1 \leq \beta2 \leq \beta+5 \text{ (initial value: } \beta2 = \beta+2\text{).}$$

That is, when the air conditioner has returned to the heating operation from the defrosting operation, if the temperature detected by the outdoor heat exchanger outlet temperature sensor 46 does not reach the predetermined temperature Tb (B- or C-return), the defrosting operation is initiated early by increasing the defrosting initiation temperature by the predetermined temperature, thereby minimizing the amount of frost on the outdoor heat exchanger 14.

The increase of the defrosting initiation line is repeatedly conducted. In the case of B- or C-return, the defrosting initiation temperature is increased by a predetermined temperature, and if B- or C-return is followed by another B- or C-return, the defrosting initiation temperature is again increased by the predetermined temperature. The increase of the defrosting initiation line is reset by A-return ($\beta2 \rightarrow \beta$).

However, once the $\beta2$ line has been set as the defrosting initiation temperature, the $\beta2$ line is detected soon after the air conditioner has returned from the defrosting operation, compared with the case where the defrosting initiation temperature has been set to the $\beta$ line. This means that there is a possibility that the defrosting operation is initiated early, even though only an insufficient amount of heat is stored in the heat storage material 36.

In the practice of the present invention, not only the β2 line is set as the defrosting initiation temperature, but a minimum heating period of time Tx is also provided. In the case of B- or C-return from the defrosting operation, the heating operation is conducted for the minimum heating period of time Tx, thereby making it possible to minimize the defrosting operation under the condition in which only an insufficient amount of heat or no heat is stored in the heat storage material 36.

That is, in the case of B- or C-return from the defrosting operation, even if the temperature detected by the outdoor heat exchanger inlet temperature sensor 44 is less than the defrosting initiation temperature set to the β2 line, no defrosting operation is conducted if the heating period of time does not reach the minimum heating period of time Tx.

The minimum heating period of time Tx can be variably set to, for example, 30 minutes to 2 hours depending on an indoor load. It is, preferred that such period of time be set long if the indoor load is low, and short if the indoor load is high. The reason for this is that if the indoor load is low, a determination can be made that the rate of frost formation is slow, and the heating operation can be continued as long as possible, while if the indoor load is high, a determination can be made that the rate of frost formation is high, and the defrosting operation can be initiated as early as possible.

This concept of the β2 line is explained with reference to Fig. 7. As described above, in this embodiment, the defrosting operation is initiated when frost formation is detected during the normal heating operation, and the defrosting operation is shifted to the normal heating operation based on the temperature detected by the outdoor heat exchanger outlet temperature sensor 46.

However, because the heating operation conducted in parallel with the defrosting operation is limited by the amount of heat in the heat storage material 36, the heating operation cannot be continued if heat in the heat storage material 36 has been used up.

Accordingly, if the temperature detected by the outdoor heat exchanger outlet temperature sensor 46 exceeds the predetermined temperature Tb, the air conditioner returns to the heating operation upon termination of the defrosting operation, but if the detected temperature does not exceed the predetermined temperature Tb within a predetermined period of time, the air conditioner is returned to the heating operation by forcibly releasing the defrosting operation. The reason for this is that no heat remains in the heat storage material 36 after a lapse of the predetermined period of time and, hence, the heating operation cannot be conducted while continuing the defrosting operation.

By way of example, step S21 shown in Fig. 7 indicates A-return, in which the temperature detected by the outdoor heat exchanger outlet temperature sensor 46 exceeds the predetermined temperature Tb before the defrosting operation is terminated. Accordingly, the defrosting initiation temperature for the next defrosting operation is determined by the β line.

On the other hand, step S22 or S36 indicates B- or C-return, in which the temperature detected by the outdoor heat exchanger outlet temperature sensor 46 does not exceed the predetermined temperature Tb (second threshold value) before the defrosting operation is terminated. Accordingly, the defrosting initiation temperature for the next defrosting operation is determined by the β2 line (for example, β+2°C) higher than the β line, thereby allowing the next defrosting operation to be conducted earlier than the normal defrosting operation.

At step S23 or S37, however, because the air conditioner returns to the heating operation without the temperature detected by the outdoor heat exchanger outlet temperature sensor 46 reaching the predetermined temperature Tb (second threshold value), there is a high possibility that frost may still remain. Accordingly, before a sufficient amount of heat is stored in the heat storage material 36, the temperature detected by the outdoor heat exchanger inlet temperature sensor 44 may reach the defrosting initiation temperature determined by the β2 line, thus allowing the defrosting operation to be conducted early.

In this case, even if the defrosting operation is conducted, frost cannot be removed while continuing the heating operation because a sufficient amount of heat is not stored in the heat storage material 36.

In view of this, in this embodiment, the heating operation is continued for at least the minimum heating period of time Tx for the purpose of storing a sufficient amount of heat in the heat storage material 36. By so doing, in the next defrosting operation, frost can be positively removed while continuing the heating operation.

If the air conditioner returns to the heating operation in B- or C-return after the defrosting operation has been conducted using the β2 line, the β2 line is raised toward a high temperature side (for example, β+3°C) to thereby allow the next or subsequent defrosting operation to be conducted earlier.

Although in this embodiment the initial value of the β2 line is set to β+2°C, the former is not limited to the latter and may be, for example, β+1°C. That is, if the β2 line is higher than the β line, the controls as described in this embodiment are satisfied.

<Protection control of heat storage material>

Referring again to Fig. 2 indicating the normal heating operation, in which no defrosting operation is conducted, the compressor 6 is operated with the defrosting two-way valve 30 and the heat storage two-way valve 42 closed, and heat generated by the compressor 6 is stored in the heat storage material 36 to gradually increase the temperature of the heat storage material 36.

If the temperature of the heat storage material 36 is excessively high, the heat storage material 36 may be deteriorated due to transformation (for example, oxidation) or boiling thereof. Accordingly, in the practice of the present invention, a protection control of the heat storage material 36 is performed by the controller 54 based on the temperature of the compressor 6, the temperature of the refrigerant discharged from the compressor 6, or the temperature of the heat storage tank 32 to avoid deterioration of the heat storage material 36. The reason for this is as follows.

• Compressor temperature: The temperature of the compressor 6 has a close relation to that of the heat storage material 36, and the latter increases with an increase of the former.
• Discharged refrigerant temperature: The temperature of the refrigerant discharged from the compressor 6 has a close relation to that of the heat storage material 36, and the latter increases with an increase of the former.
• Heat storage tank temperature: The temperature of the heat storage tank 32 has a close relation to that of the heat storage material 36, and the latter increases with an increase of the former.

As in the heating operation, the protection control of the heat storage material 36 is also performed in the cooling operation.

(i) Control based on compressor temperature

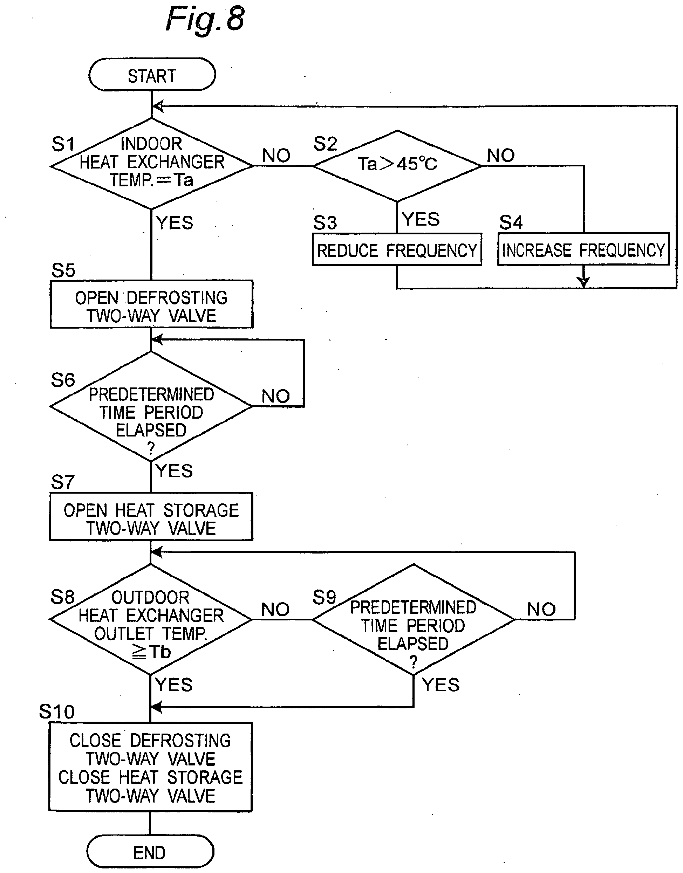

As shown in Fig. 8, a compressor temperature sensor 58 for detecting the temperature of the compressor 6 is provided. In this control, if the temperature detected by the compressor temperature sensor 58 exceeds a first predetermined temperature, the heat storage two-way valve 42 is opened to introduce a refrigerant having a reduced temperature, which has passed through the indoor heat exchanger 16 during heating or through the outdoor heat exchanger 14 during cooling, to the heat storage heat exchanger 34 for reduction of the temperature of the heat storage material 36.

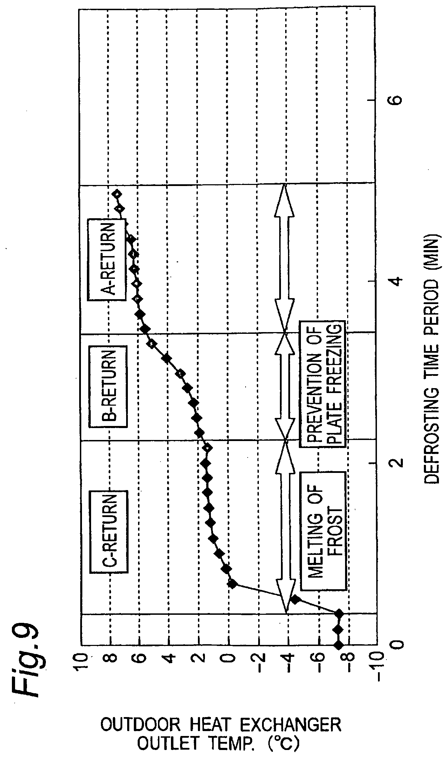

More specifically, as shown in Fig. 9, if the temperature detected by the compressor temperature sensor 58 exceeds a first predetermined temperature (for example, 95°C), the heat storage two-way valve 42 is opened, and the maximum operation frequency of the compressor 6 is limited. An excessive temperature rise of the heat storage material 36 can be prevented by opening the heat storage two-way valve 42. In particular, because the heat storage material 36 is located around the compressor 6, local boiling of the heat storage material 36 held in contact with the compressor 6 is prevented, thereby making it possible to minimize evaporation of the heat storage material 36.

Thereafter, if the temperature detected by the compressor temperature sensor 58 exceeds a second predetermined temperature (for example, 103°C) higher than the first predetermined temperature, the compressor 6 is stopped.

Also, if the temperature detected by the compressor temperature sensor 58 exceeds the first predetermined temperature (for example, 95°C), a control for reducing the operation frequency of the compressor 6 can be performed instead of opening the heat storage two-way valve 42, or alternatively the control for reducing the operation frequency of the compressor 6 can be performed simultaneously with the control for opening the heat storage two-way valve 42. That is, a reduction in operation frequency of the compressor 6 is followed by a reduction in temperature of the compressor 6, which in turn prevents local boiling of the heat storage material 36 located in the vicinity of the compressor 6.

After the temperature detected by the compressor temperature sensor 58 has exceeded the second predetermined temperature, the temperature detected by the compressor temperature sensor 58 gradually reduces by stopping the compressor 6. If the temperature detected by the compressor temperature sensor 58 becomes less than a third predetermined temperature that is lower than the second predetermined temperature by a certain temperature (for example, 5°C), operation of the compressor 6 is resumed, but the heat storage two-way valve 42 remains opened. Accordingly, the temperature detected by the compressor temperature sensor 58 further reduces, and if the detected temperature becomes less than a fourth predetermined temperature that is lower than the first predetermined temperature by a certain temperature (for example, 5°C), the heat storage two-way valve 42 is closed.

The reason why the third and fourth predetermined temperatures set in a direction of temperature reduction are respectively lower than the second and first predetermined temperatures set in a direction of temperature rise is to avoid frequent repetition (hunting) of switching operations of the heat storage two-way valve 42 or ON/OFF operations of the compressor 6.

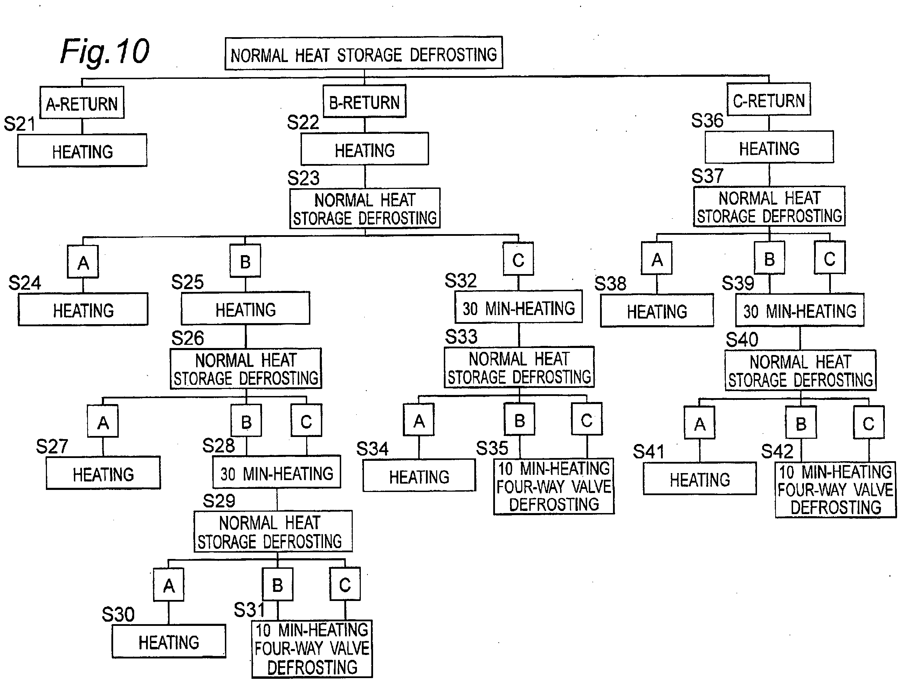

A switching control as shown in Fig. 10, in which the heat storage two-way valve 42 periodically repeats an open state and a closed state, is more preferable than the aforementioned control for opening the heat storage two-way valve 42. In the former switching control, during heating, an open state for, for example, 10 seconds and a closed state for, for example, 30 seconds repeat at a maximum of ten times, while during cooling, an open state for, for example, 30 seconds and a closed state for, for example, 90 seconds repeat at a maximum of ten times.

The control for opening and closing the heat storage two-way valve 42 in the above-described manner is performed in view of a problem of the follow-up capability such that even if the heat storage two-way valve 42 is opened, the temperature of the heat storage material 36 does not reduce immediately, and after a certain time delay, it gradually reduces.

Also, the reason why the period of time of the open state and that of the closed state of the heat storage two-way valve 42 during heating are respectively set shorter than the period of time of the open state and that of the closed state of the heat storage two-way valve 42 during cooling is that a liquid refrigerant having passed through the indoor heat exchanger 16 passes through the heat storage two-way valve 42 during heating, while a two-phase (gaseous phase and liquid phase) refrigerant having passed through the outdoor heat exchanger 14 passes through the heat storage two-way valve 42 during cooling, and the liquid refrigerant has a higher density than the two-phase refrigerant and, hence, the former has a larger amount of refrigerant than the latter.

Moreover, the opening and closing of the heat storage two-way valve 42 is limited to a maximum of ten times in view of the durability of the heat storage two-way valve 42.

(ii) Control based on discharged refrigerant temperature

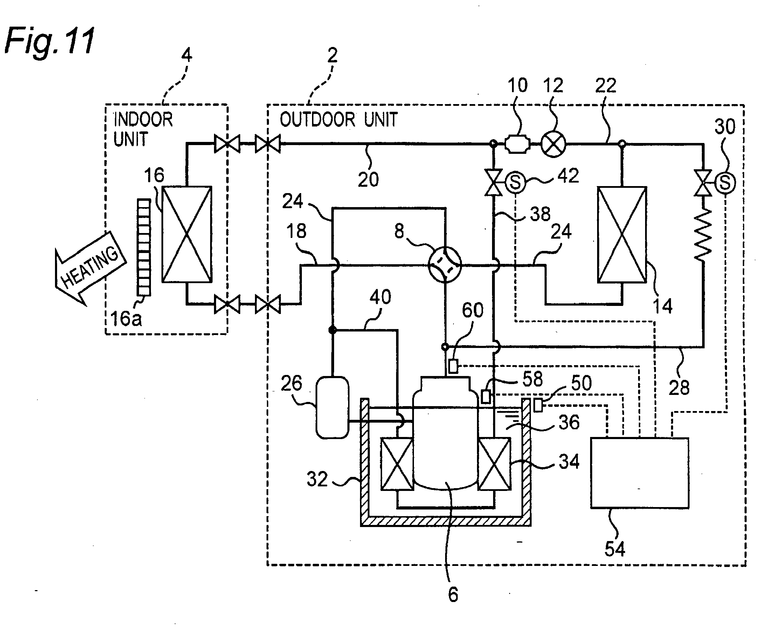

As shown in Fig. 8, a compressor discharge temperature sensor 60 for detecting the temperature of the refrigerant discharged from the compressor 6 is provided, and a control as shown in Fig. 11 is performed based on the temperature detected by the compressor discharge temperature sensor 60. Because the control of Fig. 11 is similar to that of Fig. 9, only differences therebetween are explained hereinafter.

- First predetermined temperature: for example, 90°C
- Second predetermined temperature: for example, 93°C
- Third predetermined temperature: temperature lower than the second predetermined temperature
- Fourth predetermined temperature: temperature equal to the first predetermined temperature

Because it is highly unlikely that the control based on the discharged refrigerant temperature is subject to hunting, the fourth predetermined temperature is made equal to the first predetermined temperature. However, it should be appreciated that the fourth predetermined temperature may differ from the first predetermined temperature.

The control based on the discharged refrigerant temperature is particularly effective when the refrigerant circulation volume is small, e.g., when the compressor 6 is not in operation for a long time. In such a state, a temperature rise of the compressor 6 is very slow, and it is accordingly likely that the temperature detected by the compressor temperature sensor 58 may greatly differ from the temperature of the heat storage material 36. It is therefore difficult to estimate the temperature of the heat storage material 36 based on the temperature detected by the compressor temperature sensor 58. In view of this, the protection control of the heat storage material 36 is performed upon detection of the discharged refrigerant temperature having a good follow-up capability, thereby making it possible to effectively reduce the temperature of the heat storage material 36 even when the compressor 6 is not in operation for a long time.

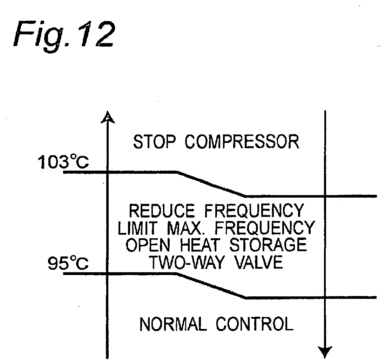

Fig. 12 depicts a modified form of Fig. 11. In the control based on the discharged refrigerant temperature as shown in Fig. 12, if the temperature detected by the compressor discharge temperature sensor 60 exceeds the first predetermined temperature, a control for increasing the opening of the expansion valve 12 (increment: for example, 30 pulses/minute) is performed, and if the temperature detected by the compressor discharge temperature sensor 60 subsequently exceeds the second predetermined temperature, a control for opening the heat storage two-way valve 42 or opening and closing it is performed.

After the temperature detected by the compressor discharge temperature sensor 60 has exceeded the second predetermined temperature, the temperature detected by the compressor discharge temperature sensor 60 is gradually reduced by opening the heat storage two-way valve 42 or opening and closing it, and if the detected temperature becomes less than the third predetermined temperature, the heat storage two-way valve 42 is closed. As a result, the temperature detected by the compressor discharge temperature sensor 60 further reduces, and if it becomes less than the fourth predetermined temperature, the opening of the expansion valve 12 is made constant before the normal control is performed.

(iii) Control based on heat storage tank temperature

This control is performed based on the temperature detected by the heat storage tank temperature sensor 50 in a manner substantially similar to the control of Fig. 9. Differences therebetween are as follows.

- First predetermined temperature: for example, 93°C
- Second predetermined temperature: for example, 95°C
- Third predetermined temperature: for example, 90°C
- Fourth predetermined temperature: for example, 88°C

In this control based on the heat storage tank temperature, because the temperature of the heat storage tank 32 itself is detected by the heat storage tank temperature sensor 50, if the temperature detected by the heat storage tank temperature sensor 50 exceeds the first predetermined temperature, only the control for opening the heat storage two-way valve 42 or opening and closing it is performed, and the control for reducing the operation frequency of the compressor 6 is not needed.

The control based on the heat storage tank temperature can positively prevent local boiling of the heat storage material 36 and boiling of the entire heat storage material 36.

In place of the heat storage tank temperature sensor 50 for detecting the temperature of the heat storage tank 32, a heat storage material temperature sensor for detecting the temperature of the heat storage material 36 in the heat storage tank 32 may be provided for a similar control based on the temperature detected thereby.

Although the protection control of the heat storage material 36 based on the compressor temperature, the discharged refrigerant temperature, or the heat storage tank temperature has been described above, the compressor temperature (CT), the discharged refrigerant temperature (DRT), and the heat storage tank temperature (HSTT) have a following relationship:

- Start-up or stabilized state: DRT>CT>HSTT
- Amount of refrigerant: minimum or clogging of refrigerating cycle: CT= HSTT >DRT

In order to protect the heat storage material 36 irrespective of the state of the air conditioner, it is most preferable that the protective control of the heat storage material 36 be performed based on all of such temperatures.

<Temperature estimation of heat storage material>

Detection of the temperature of the heat storage material 36 is needed to detect the amount of heat in the heat storage material 36 accommodated in the heat storage tank 32, but if the heat storage material temperature sensor is located within the heat storage material 36, problems of corrosion, waterproof property, and the like should be considered.

Also, if the heat storage material temperature sensor is located within the heat storage material 36, and if the heat storage tank 32 is obliquely mounted on the compressor 6 at the point of production, or the outdoor unit 2 is obliquely installed, the heat storage material temperature sensor accommodated within the heat storage tank 32 may be exposed on the outside of the heat storage material 36, thus resulting in incorrect detection of the temperature of the heat storage material 36.

Accordingly, in the practice of the present invention, as shown in Fig. 8, the heat storage tank temperature sensor 50 is fitted on the outside of the heat storage tank 32, and the temperature detected by the heat storage tank temperature sensor 50 is corrected based on the temperature detected by the outdoor air temperature sensor 52 to estimate the temperature of the heat storage material 36. By so doing, the temperature of the heat storage material 36 can be assuredly obtained, and inferior quality can be avoided while enhancing the productivity.

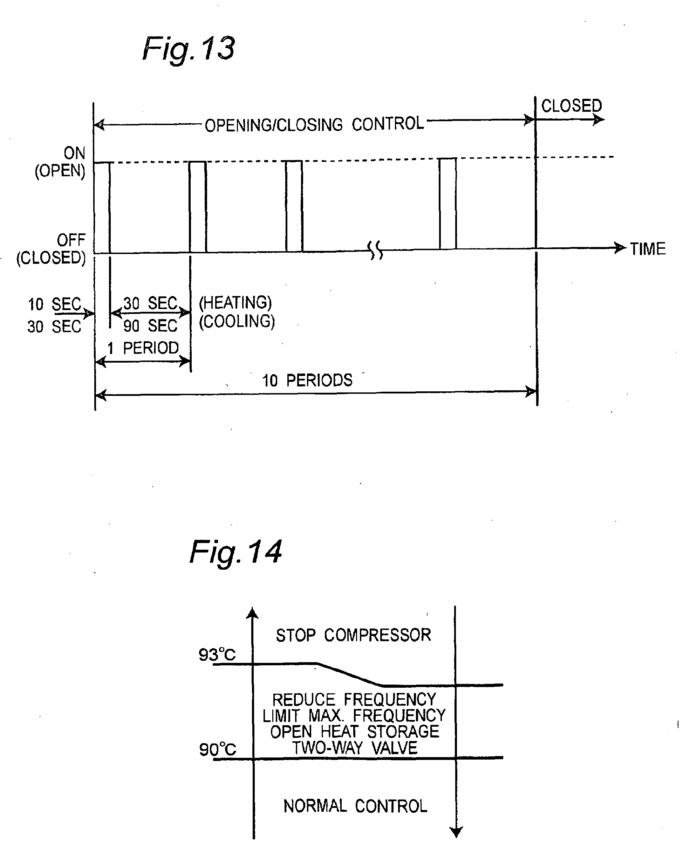

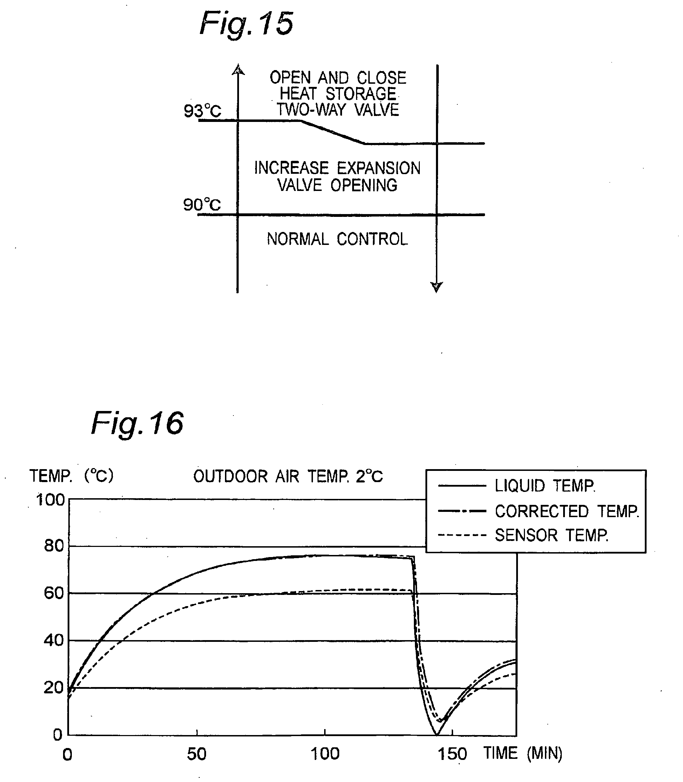

More specifically, Figs. 13 to 16 indicate an actual temperature (solid line) of the heat storage material 36 and the temperature (dotted line) detected by the heat storage tank temperature sensor 50 with respect to the outdoor air temperature.

As shown in these figures, in most cases, the actual temperature of the heat storage material 36 and the temperature detected by the heat storage tank temperature sensor 50 differ from each other.

Based on such experimental results, the inventors of this application found out that a corrected value obtained using the following formula is substantially in agreement with the actual temperature of the heat storage material 36. The formula is obtained by correcting the temperature Tc detected by the heat storage tank temperature sensor 50 based on the temperature Tout detected by the outdoor air temperature sensor 52.

$$\text{Corrected temperature} = Tc + (Tc - Tout) \times \alpha \ (\alpha = 0.15)$$

The corrected temperature calculated using this formula is indicated by a chain line in the graphs of Figs. 13 to 16, and the corrected temperature indicated by the chain line and the actual temperature of the heat storage material 36 indicated by the solid line are substantially in agreement with each other. It is to be noted that $\alpha$ is not limited to the above-described value and can be changed to an appropriate value obtained, for example, through experiments in consideration of variations in accuracy of the heat storage tank temperature sensor.

Although the heat storage tank 32 is normally fully filled with the heat storage material 36, if the heat storage material 36 reduces due to cracking of the heat storage tank 32 or evaporation of the heat storage material 36, the rate of temperature reduction (temperature gradient) of the heat storage material 36 becomes small during defrosting. In view of this, an error decision is made based on the temperature Tc detected by the heat storage tank temperature sensor 50.

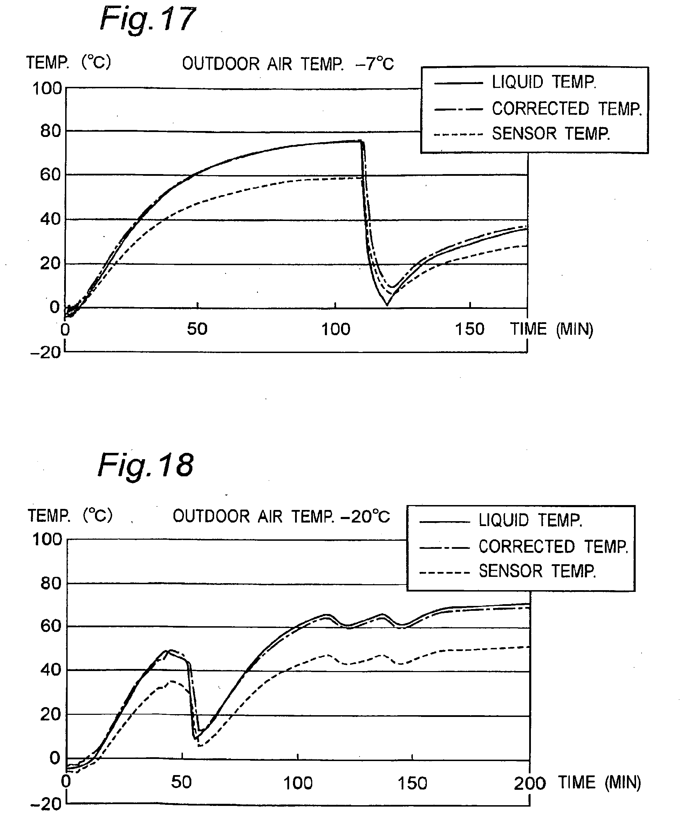

Fig. 17 indicates a change in temperature of the heat storage material 36 after a defrosting operation when the amount of the heat storage material 36 in the heat storage tank 32 is sufficient and insufficient, and particularly indicates a change in the temperature Tc detected by the heat storage tank temperature sensor 50 when the amount of the heat storage material 36 is 100% (solid line) and 50% (dotted line).

As can be seen from the graph of Fig. 17, the more the heat storage material 36 in the heat storage tank 32, the larger the rate of temperature reduction (temperature gradient) for a predetermined period of time after the start of the defrosting operation. In the present invention, if the rate of reduction for the predetermined period of time in the temperature Tc detected by the heat storage tank temperature sensor 50 is less than a predetermined rate, a decision is made that the heat storage tank 32 is short of the heat storage material 36.

Specifically, the rate of temperature reduction of the heat storage tank 32 for a predetermined period of time (for example, 3-4 minutes) after the heat storage two-way valve 42 has been opened is calculated, and if the calculated rate of temperature reduction is less than a predetermined value (for example, 2°C/minute), a warning is visually or aurally given to a person in a room. By way of example, the warning is in the form of flickering of a lamp provided on the indoor unit 4 or on a remote controller (not shown) for operation of the indoor unit 4, literal information, a warning tone, or the like.

The warning may be also given when a heat storage defrosting operation has been terminated after a lapse of a predetermined period of time (in the case of YES at step S9 in Fig. 5).

The temperature detected by the heat storage tank temperature sensor 50 is used as a reference for determination of shortage of the heat storage material 36, which takes the form of a lowered level of the heat storage material 36 in the heat storage tank 32. For this reason, it is preferred that the heat storage tank temperature sensor 50 be positioned above a vertical center of the heat storage tank 32.

Because the air conditioner according to the present invention can conduct an efficient defrosting operation using a limited amount of heat in a heat storage device, it is effectively applicable to other refrigerating machines that are subject to frost formation in winter.

List of Reference Numerals

2 outdoor unit, 4 indoor unit, 6 compressor, 8 four-way valve,
10 strainer, 12 expansion valve, 14 outdoor heat exchanger,
16 indoor heat exchanger, 18, 20, 22, 24, 28, 38, 40 refrigerant pipe,
26 accumulator, 30 defrosting two-way valve, 32 heat storage tank,
34 heat storage heat exchanger, 36 heat storage material,
42 heat storage two-way valve,
44 outdoor heat exchanger inlet temperature sensor,
46 outdoor heat exchanger outlet temperature sensor,
48 indoor heat exchanger temperature sensor,
50 heat storage tank temperature sensor, 52 outdoor air temperature sensor,
54 controller, 56 timer, 58 compressor temperature sensor,
60 compressor discharge temperature sensor.

**Claims**

1.  An air conditioner having a refrigerating cycle in which a refrigerant flows through a compressor (6), a four-way valve (8), an indoor heat exchanger (16), an expansion valve (12), an outdoor heat exchanger (14), and the four-way valve (8) in this order during heating, the air conditioner also having a heat storage tank (32) that accommodates a heat storage material for storing therein heat generated by the compressor (6) and a heat storage heat exchanger (34), and a heat storage bypass circuit provided to connect a refrigerant pipe between the indoor heat exchanger (16) and the expansion valve (12) and a refrigerant pipe between the four-way valve (8) and an inlet port defined in the compressor (6), **characterized in that**

    - a defrosting bypass circuit is provided to connect a refrigerant pipe between the expansion valve (12) and the outdoor heat exchanger (14) and a refrigerant pipe between an outlet port defined in the compressor and the four-way valve (8),

- an indoor heat exchanger temperature sensor (48) is provided for detecting a temperature in the indoor heat exchanger (16), an indoor fan for conveying air to the indoor heat exchanger (16), a heat storage two-way valve (42) provided in the heat storage bypass circuit, and
- a controller (54) is provided and configured for

providing a normal heating mode and a quick heating mode, in which a warm wind is blown out more quickly than in the normal heating mode,
if the indoor heat exchanger temperature sensor (48) detects, in the normal heating mode, a predetermined heating initiation temperature, initiating an operation of the indoor fan, and if the indoor heat exchanger temperature sensor (48) detects, in the quick heating mode, a temperature higher than the predetermined heating initiation temperature, initiating an operation of the indoor fan, and
limiting a speed of the indoor fan at a start of operation thereof in the quick heating mode.

2. The air conditioner according to claim 1, wherein said controller (54) is further configured for retaining the heat storage two-way valve (42) opened for a predetermined period of time when a heating operation is initiated in the quick heating mode.

3. The air conditioner according to claim 1 or 2, wherein a rate of increase of an operation frequency of the compressor (6) in the quick heating mode is greater than that in the normal heating mode.

4. The air conditioner according to claim 1, wherein said controller (54) is further configured for changing the speed of the indoor fan at the start of operation thereof in the quick heating mode depending on a period of time during which the temperature detected by the indoor heat exchanger temperature sensor (48) increases from a first predetermined temperature to a second predetermined temperature higher than the first predetermined temperature.

5. The air conditioner according to claim 1, wherein said controller (54) is further configured for increasing the limited speed of the indoor fan at the start of operation thereof in the quick heating mode by a predetermined speed for every predetermined period of time.

**Patentansprüche**

1. Klimagerät mit einem Kältekreis, in dem während des Heizens ein Kältemittel durch einen Kompressor (6), ein Vier-Wege-Ventil (8), einen Innen-Wärmeaustauscher (16), ein Entspannungsventil (12), einen Außen-Wärmeaustauscher (14) und das Vier-Wege-Ventil (8) in dieser Reihenfolge strömt, wobei das Klimagerät auch aufweist einen Wärmespeicherbehälter (32), der ein Wärmespeichermaterial zum Speichern von Wärme, die durch den Kompressor (6) erzeugt wird, und einen Wärmespeicherungs-Wärmeaustauscher (34) aufnimmt, und einen Wärmespeicherungs-Nebenstromkreislauf, der vorgesehen ist, um eine Kältemittelrohrleitung zwischen dem Innen-Wärmeaustauscher (16) und dem Entspannungsventil (12) und eine Kältemittelrohrleitung zwischen dem Vier-Wege-Ventil (8) und einer in dem Kompressor (6) festgelegten Einlassöffnung zu verbinden, **dadurch gekennzeichnet, dass**

- ein Abtau-Nebenstromkreislauf vorgesehen ist, um eine Kältemittelrohrleitung zwischen dem Entspannungsventil (12) und dem Außen-Wärmeaustauscher (14) und eine Kältemittelrohrleitung zwischen einer in dem Kompressor festgelegten Auslassöffnung und dem Vier-Wege-Ventil (8) zu verbinden,
- ein Innen-Wärmeaustauscher-Temperaturfühler (48) vorgesehen ist zum Erfassen einer Temperatur in dem Innen-Wärmeaustauscher (16), ein Innenlüfter zum Zuführen von Luft zum Innen-Wärmeaustauscher (16) vorgesehen ist, und ein Wärmespeicherungs-Zwei-Wege-Ventil (42) in dem Wärmespeicherungs-Nebenstromkreislauf vorgesehen ist, und
- eine Steuervorrichtung (54) vorgesehen und ausgelegt ist zum

Erbringen eines normalen Heizmodus und eines Schnellheizmodus, bei dem ein warmer Wind schneller als im normalen Heizmodus ausgeblasen wird,
wenn der Innen-Wärmeaustauscher-Temperaturfühler (48) im normalen Heizmodus eine vorbestimmte Heizungseinleitungstemperatur erfasst, Einleiten eines Betriebs des Innenlüfters, wenn der Innen-Wärmeaustauscher-Temperaturfühler (48) im Schnellheizmodus eine höhere Temperatur als die vorbestimmte Heizungseinleitungstemperatur erfasst, Einleiten eines Betriebs des Innenlüfters, und
Begrenzen einer Drehzahl des Innenlüfters bei dessen Betriebsstart im Schnellheizmodus.

**2.** Klimagerät nach Anspruch 1, wobei die Steuervorrichtung (54) weiter ausgelegt ist, das Wärmespeicherungs-Zwei-Wege-Ventil (42) über einen vorbestimmten Zeitraum geöffnet zu halten, wenn ein Heizbetrieb im Schnellheizmodus eingeleitet ist.

**3.** Klimagerät nach Anspruch 1 oder 2, wobei eine Anstiegsrate einer Betriebshäufigkeit des Kompressors (6) im Schnellheizmodus größer ist als im normalen Heizmodus.

**4.** Klimagerät nach Anspruch 1, wobei die Steuervorrichtung (54) weiter ausgelegt ist, die Drehzahl des Innenlüfters bei dessen Betriebsstart im Schnellheizmodus abhängig von einem Zeitraum zu ändern, während dessen sich die durch den Innen-Wärmeaustauscher-Temperaturfühler (48) erfasste Temperatur von einer ersten vorbestimmten Temperatur zu einer zweiten vorbestimmten Temperatur erhöht, die höher ist als die erste vorbestimmte Temperatur.

**5.** Klimagerät nach Anspruch 1, wobei die Steuervorrichtung (54) weiter ausgelegt ist, die begrenzte Drehzahl des Innenlüfters bei dessen Betriebsstart im Schnellheizmodus um eine vorbestimmte Drehzahl für jeden vorbestimmten Zeitraum zu erhöhen.


**Revendications**

**1.** Climatiseur possédant un cycle frigorifique dans lequel un réfrigérant circule à travers un compresseur (6), un distributeur à quatre orifices (8), un échangeur de chaleur intérieur (16), une valve d'expansion (12), un échangeur de chaleur extérieur (14) et le distributeur à quatre orifices (8), dans cet ordre, durant le chauffage, le climatiseur possédant également un réservoir d'accumulation de chaleur (32) qui accueille une matière d'accumulation de chaleur pour y accumuler la chaleur générée par le compresseur (6), un échangeur de chaleur d'accumulation de chaleur (34) et un circuit de dérivation d'accumulation de chaleur fourni pour connecter un tube de réfrigérant entre l'échangeur de chaleur intérieur (16) et la valve d'expansion (12) et un tube de réfrigérant entre le distributeur à quatre orifices (8) et un orifice d'admission défini dans le compresseur (6),
**caractérisé en ce que**

- un circuit de dérivation de dégivrage est fourni pour connecter un tube de réfrigérant entre la valve d'expansion (12) et l'échangeur de chaleur extérieur (14) et un tube de réfrigérant entre un orifice de sortie défini dans le compresseur et le distributeur à quatre orifices (8),
- un capteur de température d'échangeur de chaleur intérieur (48) est fourni pour détecter une température dans l'échangeur de chaleur intérieur (16), un ventilateur intérieur pour refouler l'air vers l'échangeur de chaleur intérieur (16), un distributeur à deux voies d'accumulation de chaleur (42) sont fournis dans le circuit de dérivation d'accumulation de chaleur, et
- un régulateur (54) est fourni et configuré pour

fournir un mode de chauffage normal et un mode de chauffage rapide, dans lequel un vent chaud est expulsé plus rapidement que dans le mode de chauffage normal,
si le capteur de température d'échangeur de chaleur intérieur (48) détecte, dans le mode de chauffage normal, une température de début de chauffage prédéterminée, démarrant un fonctionnement du ventilateur intérieur, et si le capteur de température d'échangeur de chaleur intérieur (48) détecte, dans le mode de chauffage rapide, une température supérieure à la température de début de chauffage prédéterminée, démarrer un fonctionnement du ventilateur intérieur, et
limiter une vitesse du ventilateur intérieur à un démarrage d'un fonctionnement de ce dernier en mode de chauffage rapide.

**2.** Climatiseur selon la revendication 1, dans lequel ledit régulateur (54) est en outre configuré pour maintenir ouvert le distributeur à deux voies d'accumulation de chaleur (42) pendant une période de temps prédéterminée lorsqu'une opération de chauffage est démarrée en mode de chauffage rapide.

**3.** Climatiseur selon la revendication 1 ou 2, dans lequel un taux d'augmentation d'une fréquence de fonctionnement du compresseur (6) en mode de chauffage rapide est supérieur à celui du mode de chauffage normal.

**4.** Climatiseur selon la revendication 1, dans lequel ledit régulateur (54) est en outre configuré pour modifier la vitesse du ventilateur intérieur au début du fonctionnement de ce dernier en mode de chauffage rapide en fonction d'une période de temps durant laquelle la température détectée par le capteur de température d'échangeur de chaleur intérieur (48) augmente depuis une première température prédéterminée à une seconde température prédéterminée supérieure à la première température prédéterminée.

5. Climatiseur selon la revendication 1, dans lequel ledit régulateur (54) est en outre configuré pour augmenter la vitesse limitée du ventilateur intérieur au démarrage du fonctionnement de ce dernier en mode de chauffage rapide d'une vitesse prédéterminée pour chaque période de temps prédéterminée.

Fig.1

# Fig.2

*Fig.3*

Fig. 4

*Fig.5*

INDOOR HEAT EXCHANGER TEMP.

EP 2 437 009 B1

## *Fig. 6*

| Time from temperature Ya to temperature Yb | Limited initial speed of indoor fan |
|---|---|
| 0 sec. | No limit |
| 1 sec.≤t<30 sec. | 950 rpm |
| 30 sec.≤t<60 sec. | 850 rpm |
| 60 sec.≤t<90 sec. | 750 rpm |
| 90 sec.≤t<120 sec. | 650 rpm |
| 120 sec.≤t<180 sec. | 550 rpm |
| 180 sec.≤t | 400 rpm |

## Fig.7

# Fig.8

```
                    ┌─────────┐
                    │  START  │
                    └────┬────┘
                         │◄──────────────────────────────────────────────┐
              S1        ╱│╲                                               │
              ╱  INDOOR      ╲         NO    S2  ╱        ╲      NO        │
             ╱ HEAT EXCHANGER ╲──────────────── ╱ Ta>45°C  ╲──────────┐   │
             ╲   TEMP.=Ta     ╱                 ╲          ╱           │   │
              ╲              ╱                    ╲        ╱            │   │
                  │ YES                    S3    YES      S4            │   │
                  │                    ┌──────────────┐  ┌──────────────────┐
       S5         │                    │   REDUCE     │  │ INCREASE FREQUENCY│
    ┌─────────────────┐                │  FREQUENCY   │  └──────────────────┘
    │ OPEN DEFROSTING │                └──────┬───────┘            │
    │  TWO-WAY VALVE  │                       │                    │
    └────────┬────────┘                       └────────────────────┘
             │◄──────────────────────────┐
      S6    ╱│╲                           │
          ╱PREDETERMINED╲        NO       │
         ╱  TIME PERIOD  ╲────────────────┘
         ╲    ELAPSED    ╱
          ╲     ?       ╱
              │ YES
       S7     │
    ┌─────────────────┐
    │ OPEN HEAT STORAGE│
    │  TWO-WAY VALVE  │
    └────────┬────────┘
             │◄────────────────────────────────────────────────┐
      S8    ╱│╲                      S9   ╱        ╲      NO    │
          ╱   OUTDOOR   ╲     NO        ╱PREDETERMINED╲─────────┘
         ╱ HEAT EXCHANGER╲────────────╱  TIME PERIOD  ╲
         ╲ OUTLET TEMP.  ╱            ╲    ELAPSED    ╱
          ╲   ≧Tb       ╱              ╲     ?       ╱
              │ YES                        │ YES
      S10     │◄──────────────────────────┘
    ┌─────────────────┐
    │ CLOSE DEFROSTING│
    │  TWO-WAY VALVE  │
    │ CLOSE HEAT STORAGE│
    │  TWO-WAY VALVE  │
    └────────┬────────┘
         ┌───┴───┐
         │  END  │
         └───────┘
```

Fig.9

*Fig.10*

NORMAL HEAT STORAGE DEFROSTING

S21 A-RETURN — HEATING

S22 B-RETURN — HEATING — S23 NORMAL HEAT STORAGE DEFROSTING

- B — S25 HEATING — S26 NORMAL HEAT STORAGE DEFROSTING
  - A — S24 HEATING
  - A — S27 HEATING
  - B — S28 30 MIN-HEATING — S29 NORMAL HEAT STORAGE DEFROSTING
    - A — S30 HEATING
    - B — S31 10 MIN-HEATING FOUR-WAY VALVE DEFROSTING
    - C
  - C
- C — S32 30 MIN-HEATING — S33 NORMAL HEAT STORAGE DEFROSTING
  - A — S34 HEATING
  - B — S35 10 MIN-HEATING FOUR-WAY VALVE DEFROSTING
  - C

S36 C-RETURN — HEATING — S37 NORMAL HEAT STORAGE DEFROSTING

- A — S38 HEATING
- B — S39 30 MIN-HEATING — S40 NORMAL HEAT STORAGE DEFROSTING
  - A — S41 HEATING
  - B — S42 10 MIN-HEATING FOUR-WAY VALVE DEFROSTING
  - C
- C

Fig.11

## Fig.12

STOP COMPRESSOR

103°C

REDUCE FREQUENCY
LIMIT MAX. FREQUENCY
OPEN HEAT STORAGE
TWO-WAY VALVE

95°C

NORMAL CONTROL

## Fig.13

## Fig.14

## Fig.15

OPEN AND CLOSE
HEAT STORAGE
TWO-WAY VALVE

93°C

INCREASE EXPANSION
VALVE OPENING

90°C

NORMAL CONTROL

## Fig.16

TEMP. (°C)     OUTDOOR AIR TEMP. 2°C

———— LIQUID TEMP.

—·—· CORRECTED TEMP.

------ SENSOR TEMP.

TIME (MIN)

## Fig.17

## Fig.18

## Fig.19

## Fig.20

## Fig.21

## REFERENCES CITED IN THE DESCRIPTION

### Patent documents cited in the description

- JP 3031666 A
- WO 2010106805 A1
- JP S63233266 A